# EUROPÄISCHE PATENTSCHRIFT

(11) **EP 4 065 300 B1**
(45) Veröffentlichungstag und Bekanntmachung des Hinweises auf die Patenterteilung: **08.11.2023**
(21) Anmeldenummer: 20820316.6
(22) Anmeldetag: 19.11.2020
(51) Int. Cl.: B23B 27/10, B23B 29/04, B23B 27/04, B23C 5/28

(54) **SCHNEIDELEMENTHALTER UND HALTER FÜR EINEN SCHNEIDELEMENTHALTER**
CUTTING ELEMENT HOLDER AND HOLDER FOR A CUTTING ELEMENT HOLDER
SUPPORT D'ÉLÉMENT DE COUPE ET SUPPORT POUR UN SUPPORT D'ÉLÉMENT DE COUPE

(30) Priorität: 26.11.2019 AT 13819 U
(43) Veröffentlichungstag der Anmeldung: 05.10.2022
(73) Patentinhaber: CERATIZIT Austria Gesellschaft m.b.H., 6600 Reutte (AT)
(72) Erfinder: GÖBERL, Christian, 6600 Reutte (AT); SCHLEINKOFER, Uwe, 6600 Reutte (AT); SCHWEISSGUT, Andreas, 6600 Reutte (AT); SENZENBERGER, Martin, 6600 Reutte (AT); VENTURINI, Remus, 6600 Reutte (AT)
(74) Vertreter: Ciesla, Dirk
(86) Internationale Anmeldenummer: PCT/AT2020/060408
(87) Internationale Veröffentlichungsnummer: WO 2021/102493

(56) Entgegenhaltungen:
- DE-A1-102011 081 502
- DE-A1-102015 108 904
- DE-A1-102016 101 422

## Beschreibung

Die vorliegende Erfindung betrifft einen Schneidelementhalter gemäß dem Oberbegriff des Patentanspruchs 1, mit einer Ausnehmung, welche zur Aufnahme eines Schneidelements ausgebildet ist, einem Einspannabschnitt, welcher zum Einspannen des Schneidelementhalters in einem Halter ausgebildet ist, einer durch ein Kühlschmiermittel durchströmbaren internen Kanalstruktur, mindestens einer Eintrittsöffnung zum Eintritt des Kühlschmiermittels in die Kanalstruktur und mindestens einer Austrittsöffnung zum Austritt des Kühlschmiermittels aus der Kanalstruktur.

Die vorliegende Erfindung betrifft ferner einen Halter gemäß dem Oberbegriff des Patentanspruchs 8, mit einer Einspannvorrichtung, welche zum Einspannen eines Schneidelementhalters ausgebildet ist, einer durch ein Kühlschmiermittel durchströmbaren internen Kanalstruktur, mindestens einer Eintrittsöffnung zum Eintritt des Kühlschmiermittels in die Kanalstruktur und mindestens einer Austrittsöffnung zum Austritt des Kühlschmiermittels aus der Kanalstruktur.

Wenn das Schneidelement in der Ausnehmung eines Schneidelementhalters der eingangs genannten Art aufgenommen ist, wirken beim Schneiden mit dem Schneidelement, insbesondere im Falle schwierig zu zerspanender Werkstücke und hoher Arbeitsgeschwindigkeiten, üblicherweise relativ hohe Reibungskräfte auf das Schneidelement. Werden keine geeigneten Maßnahmen ergriffen, führt dies zu einer Überhitzung des Schneidelements, so dass die Leistungsfähigkeit und Widerstandsfähigkeit des Schneidelementes schnell nachlassen, was zu hohem Verschleiß des Schneidelementes führt. Es ist daher üblich, dass der Eingriff des Schneidelement in ein sich relativ dazu bewegendes Werkstück und daran angrenzende Bereiche des Werkstücks mit Kühlschmiermittel versorgt werden. Entsprechendes gilt, wenn der Schneidelementhalter mit dem Schneidelement in einem Halter der eingangs genannten Art eingespannt ist.

In gleicher Weise ist es wichtig, dass die durch das Schneidelement erzeugten Späne aus dem Eingriffsbereich wegtransportiert werden, um einen negativen Einfluss dieser auf die Oberflächengüte des Werkstücks zu reduzieren.

So sind aus der EP 3 023 179 A1 ein Schneidelementhalter in Form einer Stechklinge mit interner Kühlschmiermittelzufuhr und aus der DE 10 2009 060 046 A1 ein Halter in Form einer Werkzeugaufnahme mit interner Kühlschmiermittelzufuhr bekannt. Deren Kanalstruktur neigt aber dazu, durch Späne zu verstopfen. Weil sich die Späne einer solchen Verstopfung mechanisch verkrallen, ist es zudem schwierig, diese aus der Kanalstruktur zu entfernen, insbesondere im Falle relativ enger Kanäle, wie sie für eine Präzisionsschmiermittelkühlung benötigt werden.

Die DE 10 2011 081 502 A1 zeigt ein Filter zum Filtern von Kühlschmiermittel und offenbart einen Schneidelementhalter gemäß dem Oberbegriff des Patentanspruchs 1 und einen Halter gemäß dem Oberbegriff des Patentanspruchs 8.

Die Aufgabe der vorliegenden Erfindung ist es daher, einen Schneidelementhalter und einen Halter anzugeben, durch welche jeweils in verbesserter Weise eine Verstopfung der Kanalstruktur vermieden und eine einfachere Entnahme der im Bereich der Kanalstruktur angesammelten festen Teilchen, insbesondere Späne, bereitgestellt wird.

Die Aufgabe wird durch einen Schneidelementhalter nach Anspruch 1 gelöst. Vorteilhafte Weiterbildungen sind in den von Anspruch 1 abhängigen Ansprüchen angegeben.

Der Schneidelementhalter weist eine Ausnehmung, welche zur Aufnahme eines Schneidelements ausgebildet ist, einen Einspannabschnitt, welcher zum Einspannen des Schneidelementhalters in einem Halter ausgebildet ist, eine durch ein Kühlschmiermittel durchströmbare interne Kanalstruktur, mindestens eine Eintrittsöffnung zum Eintritt des Kühlschmiermittels in die Kanalstruktur und mindestens eine Austrittsöffnung zum Austritt des Kühlschmiermittels aus der Kanalstruktur auf, wobei mindestens in einem ersten Kanal der Kanalstruktur ein Filterelement mit einer Filterstruktur zur Sperrung eines Transports durch das Kühlschmiermittel transportierter fester Teilchen angeordnet ist und das Filterelement als Behälter zur Bevorratung der am Transport gesperrten festen Teilchen ausgebildet ist. Dies ist vorteilhaft, weil das Filterelement den Transport der in dem Kühlschmiermittel enthaltenen festen Teilchen, zum Beispiel Späne, ab einer durch die Filterstruktur definierten Mindestgröße sperrt, so dass mit Vorteil für eine Vermeidung einer Verstopfung der Kanalstruktur stromabwärts des Filterelements eine Konzentration der festen Teilchen, zum Beispiel Späne, in dem Kühlschmiermittel reduziert wird, vorzugsweise auf null. Weil das Filterelement zugleich als Behälter zur Bevorratung der am Transport gesperrten festen Teilchen, insbesondere Späne, ausgebildet ist, können diese sich darin ansammeln, so dass deren Entnahme durch eine Entnahme des Filterelements aus dem ersten Kanal in einfacher Weise bereitgestellt wird. Ein weiterer Vorteil besteht darin, dass das Filterelement über die Anordnung in dem ersten Kanal in den Schneidelementhalter integriert ist, also ein internes Bauteil des Schneidelementhalters ist. Denn dadurch entfallen mit Vorteil die Realisierung eines separaten Gehäuses für das Filterelement sowie eines separaten Behälters zur Aufnahme der festen Teilchen, zum Beispiel Späne. Durch letzteres wird also unter Vermeidung größeren konstruktiven Aufwands, insbesondere also ohne, dass eine Filteranlage, etwa im Sinne einer Bandfilteranlage oder dergleichen, außerhalb des Schneidelementhalters vorgesehen werden muss, eine zuverlässige Filtration des Kühlschmiermittels bereitgestellt. Dabei ist es besonders vorteilhaft, wenn der erste Kanal in eine Außenoberfläche des Schneidelementhalters mündet, indem dort die Eintrittsöffnung vorgesehen ist. Der Kanal ist danach von außen zugänglich.

Mit dem Schneidelement ist im Sinne der vorliegenden Offenbarung insbesondere gemeint, dass dieses einen Schneidteil mit einer oder mehreren Schneiden und optional einen an den Schneidteil anschließenden Trägerteil, von welchem das Schneidelement getragen wird, aufweist.

Wenn der optionale Trägerteil vorgesehen ist, ist der Schneidteil mit diesem verbunden, indem der Schneidteil und der Trägerteil zum Beispiel als monolithischer Körper aus demselben Material gebildet sind, wie dies zum Beispiel durch Schleifen oder generatives Herstellen aus einem Pulver erhältlich ist, oder indem zum Beispiel der Schneidteil mit dem Trägerteil stoffschlüssig, zum Beispiel durch Löten oder Schweißen, verbunden ist, wobei der Schneidteil und der Träger dabei aus verschiedenen Materialien bestehen.

Wenn der optionale Trägerteil vorgesehen ist, können dieser und damit das Schneidelement in der Ausnehmung angeordnet aufgenommen werden, wobei zumindest eine Schneide des Schneidteils zumindest bereichsweise zum Eingriff in ein Werkstück freisteht.

Wenn der Trägerteil nicht vorgesehen ist, können der Schneidteil und damit das Schneidelement in der Ausnehmung angeordnet aufgenommen werden, wobei zumindest eine Schneide des Schneidteils zumindest bereichsweise freisteht. In diesem Fall ist der Schneidteil in der Ausnehmung bereichsweise angeordnet.

Das Schneidelement kann im Sinne der vorliegenden Offenbarung auch eine Kanalstruktur aufweisen, welche derart ausgebildet ist, dass diese mit der Kanalstruktur des Schneidelementhalters verbunden ist, wenn das Schneidelement in der Ausnehmung aufgenommen ist. Auf diese Weise kann das Kühlschmiermittel aus dem Schneidelement über eine Austrittsöffnung dessen austreten und über eine entsprechende Eintrittsöffnung dessen eintreten, wobei diese Eintrittsöffnung mit der mindestens einen Eintrittsöffnung des Schneidelementhalter verbunden ist.

Mit der Ausnehmung ist im Sinne der vorliegenden Offenbarung insbesondere ein Schneidelementsitz, wie er zum Beispiel durch einen Klemmfinger und einem diesem gegenüberliegenden Auflagerbereich gebildet wird, ein Plattensitz, zum Beispiel in Form einer taschenförmigen Ausfräsung, oder eine Bohrung, gemeint. Im Falle einer Bohrung und einer Realisierung des optionalen Trägerteils ist das Trägerteil vorzugsweise in der Bohrung angeordnet.

Die Austrittsöffnung ist im Sinne der vorliegenden Offenbarung zum Beispiel im Bereich einer die Ausnehmung begrenzenden Ausnehmungswandung des Schneidelementhalters vorgesehen. Vorzugsweise mündet der erste Kanal in die Eintrittsöffnung, wodurch eine besondere einfache Montage- sowie Demontage des Filterelements bereitgestellt wird, wobei im Falle der Demontage die in dem Filterelement angesammelten Späne dadurch aus dem Schneidelementhalter entnommen werden können. Der erste Kanal ist also von außen zugänglich.

Das Filterelement weist einen Innenraum zur Aufnahme der am Transport gesperrten festen Teilchen und eine Entnahmeöffnung zur Entnahme der am Transport gesperrten festen Teilchen aus dem Innenraum auf, wobei das Filterelement derart angeordnet ist, dass das Kühlschmiermittel bei einer Strömung von der Eintrittsöffnung nach der Austrittsöffnung in den Innenraum über die Entnahmeöffnung eintritt. Dadurch werden eine besonders zweckmäßige Bevorratung im Sinne eines Reservoirs der am Transport gesperrten festen Teilchen, indem diese in dem Innenraum angesammelt und durch die Filterstruktur an einem weiteren Transport in eine Strömungsrichtung des Kühlschmiermittels gesperrt werden, und eine besonders zweckmäßige Entnahme dieser aus dem Innenraum und damit dem Filterelement über die Entnahmeöffnung bereitgestellt.

Durch die Filterstruktur ist eine den Innenraum umfänglich umgebende Filterumfangswandung gebildet. Dadurch kann das Kühlschmiermittel das Filterelement insbesondere quer zu einer Längsachse, welche zum Beispiel eine Rotationssymmetrieachse des Filterelements ist und alternativ oder ergänzend durch eine Strömungsrichtung des Kühlschmiermittels in dem ersten Kanal vorgegeben ist, des Filterelements durchströmen und wird der Transport der festen Teilchen in diese Richtung gesperrt. Die Filterstruktur ist dabei vorzugsweise netzartig, insbesondere ist sie aus einem geflochtenen Drahtgewebe oder aus an Verbindungspunkten verbundenen Drähten gebildet. Die Filterumfangswandung ist zum Beispiel im Sinne eines Zylindermantels ausgeformt. Da die Filterumfangsumwandung durch die Filterstruktur gebildet ist, ist die Filterumfangswandung dadurch im Sinne eines Siebs durch das Kühlschmiermittel durchströmbar und sperrt zugleich den Transport der festen Teilchen, zum Beispiel Späne, durch diese.

Gemäß einer Weiterbildung des Schneidelementhalters ist durch die Filterstruktur eine den Innenraum an einem Ende begrenzende Filterbodenwandung gebildet. Dadurch kann in vorteilhafterweise das Kühlschmiermittel das Filterelement insbesondere parallel zu einer Längsachse, welche zum Beispiel eine Rotationssymmetrieachse des Filterelements ist und alternativ oder ergänzend durch eine tatsächliche oder hypothetische Strömungsrichtung des Kühlschmiermittels in dem ersten Kanal vorgegeben ist, des Filterelements durchströmen und kann der Transport der festen Teilchen in diese axiale Richtung stromabwärts gesperrt werden. Da die Filterbodenwandung durch die Filterstruktur gebildet ist, ist die Filterbodenwandung dadurch im Sinne eines Siebs durch das Kühlschmiermittel durchströmbar und sperrt zugleich den Transport der festen Teilchen, zum Beispiel Späne, durch diese.

Gemäß einer Weiterbildung des Schneidelementhalters weist das Filterelement eine Rahmenstruktur zur zumindest bereichsweisen Abstützung der Filterstruktur auf. Dies ist vorteilhaft, weil durch die Rahmenstruktur eine mechanische Stabilisierung der Filterstruktur bereitgestellt wird, wobei die Rahmenstruktur zum Beispiel aus einem oder mehreren, vorzugweise zwei, drei, vier, fünf, sechs, sieben, acht, neun, zehn oder mehr ringförmigen Rahmenstrukturelementen gebildet werden kann, welche einen Außendurchmesser des Filterelements definieren. Die ringförmigen Rahmenstrukturelemente oder auch nur eines der ringförmigen Rahmenstrukturelemente können bzw. kann eines oder mehrere Strebenelement der Rahmenstruktur aufweisen, über welche diametral zueinander angeordnete Innenbereiche des oder der ringförmigen Rahmenstrukturelemente miteinander zur radialen Abstützung der Filterstruktur verbunden sind. Außerdem kann die Rahmenstruktur in vorteilhafterweise dazu dienen, dass das Filterelement über die Rahmenstruktur in dem ersten Kanal reibschlüssig reversibel lösbar positioniert werden kann, weil die Rahmenstruktur dem Filterelement zum Beispiel ein Übermaß gegenüber einer inneren Abmessung des ersten Kanals verleiht, so dass auf diese Weise eine Presspassung realisiert wird.

Gemäß einer Weiterbildung des Schneidelementhalters weist das Filterelement ein Ösenelement zum formschlüssigen Eingriff mit einem Hakenelement auf. Dadurch kann das Filterelement besonders einfach aus dem ersten Kanal entfernt werden, indem das Hakenelement mit dem Ösenelement in Eingriff gebracht wird, so dass das Filterelement sonach über eine Bewegung des Hakenelements, vorzugsweise in eine axiale Richtung, welche einer Strömungsrichtung des Kühlschmiermittels in dem ersten Kanal entgegengesetzt ist, aus dem ersten Kanal entfernt und die Späne aus dem Innenraum des Filterelements außerhalb des Schneidelementhalters entnommen werden können. Das Ösenelement ist zum Beispiel von der Filterstruktur verschieden und in Form einer geraden oder gebogenen Querstrebe ausgeformt, welche optional im Bereich der Eintrittsöffnung mit dem Filterelement verbunden ist.

Gemäß einer Weiterbildung des Schneidelementhalters ist das Filterelement in dem ersten Kanal axial beweglich gelagert. Dadurch kann das Filterelement in vorteilhafterweise in den ersten Kanal, zum Beispiel nachdem ein Reibungswiderstand zwischen dem Filterelement und dem ersten Kanal überwunden wurde oder wird, hineingeschoben werden, zum Beispiel bis das Filterelement stirnseitig die Kanalstruktur zumindest abschnittsweise kontaktiert oder eine andere vorgegebene Position in dem ersten Kanal erreicht ist, so dass das Filterelement in einem mit dem Kühlschmiermittel durchströmten Zustand des ersten Kanals in dem ersten Kanal axial gegen die Kanalstruktur durch das Kühlschmiermittel gepresst wird. Indem das Filterelement in dem ersten Kanal axial beweglich gelagert ist, wird es außerdem in einer reversibel montierbaren sowie reversibel demontierbaren Form bereitgestellt. Dies erleichtert die Handhabung des Filterelements dahingehend, dass die Späne aus diesem besonders einfach entfernt werden können, indem das Filterelement aus dem ersten Kanal herausgeschoben und sodann die Späne aus dem Filterelement entnommen werden können.

Gemäß einer Weiterbildung des Schneidelementhalters geht der erste Kanal in einen zweiten Kanal der Kanalstruktur über und durchströmt das Kühlschmiermittel bei einer Strömung von der Eintrittsöffnung nach der Austrittsöffnung das Filterelement, bevor es in den zweiten Kanal eintritt. Dies ist vorteilhaft, weil durch das Filterelement bereits im Vorfelde eine Verstopfung des zweiten Kanals vermieden wird, insbesondere wenn ein Strömungsquerschnitt des zweiten Kanals kleiner ist als ein Strömungsquerschnitt des ersten Kanals; die kann zum Beispiel im Form eines Durchmessers der Kanäle bemessen werden. Denn in einem dementsprechend engeren (zweiten) Kanal können bereits relativ kleine Späne zu einer Verstopfung führen. Das Filterelement ist dabei vorzugsweise so angeordnet, dass das Kühlschmiermittel in das Filterelement als erstes über die Entnahmeöffnung eintritt. Mit dem Begriff Strömungsquerschnitt ist eine quer zur Strömungsrichtung bemessene Fläche der Kanäle der Kanalstruktur gemeint, im Falle zylindrischer Kanäle also eine Kreisfläche.

Mit den Begriffen "in den zweiten Kanal übergeht" ist im Sinne der vorliegenden Offenbarung zum Beispiel gemeint, dass zwischen dem ersten und dem zweiten Kanal ein stetiger oder diskreter Übergang gebildet ist. Ersterer zum Beispiel in Form einer Verjüngung des ersten Kanals, letzterer zum Beispiel im Form einer Stufe.

Gemäß einer Weiterbildung des Schneidelementhalters geht der erste Kanal in den zweiten Kanal derart über, dass bei der Strömung des Kühlschmiermittels von der Eintrittsöffnung nach der Austrittsöffnung dieses umgelenkt wird. Dies ist vorteilhaft, weil dadurch auch dann eine Filtration des Kühlschmiermittels bereitgestellt wird, wenn das Kühlschmiermittel in eine von dem ersten Kanal definierte andere Richtung strömen soll, zum Beispiel um einen gegenüber einer Längsachse des Schneidelementhalters definierten schrägorientierten Austritt des Kühlschmiermittels bereitzustellen. Das Filterelement ist dabei vorzugsweise so angeordnet, dass das Kühlschmiermittel in das Filterelement als erstes über die Entnahmeöffnung eintritt. Vorzugsweise ist dabei der Strömungsquerschnitt des zweiten Kanals kleiner als der Strömungsquerschnitt des ersten Kanals, welcher außerhalb eines Übergangsbereichs, zum Beispiel einer Verjüngung des ersten Kanals, bemessen wird. Vorzugsweise geht der erste Kanal in den zweiten Kanal schräg oder quer dazu über.

Die Aufgabe wird auch durch einen Halter nach Anspruch 8 gelöst. Vorteilhafte Weiterbildungen des Halters sind in den davon abhängigen Ansprüchen angegeben.

Der Halter weist eine Einspannvorrichtung, welche zum Einspannen eines Schneidelementhalters ausgebildet ist, eine durch ein Kühlschmiermittel durchströmbare interne Kanalstruktur, mindestens eine Eintrittsöffnung zum Eintritt des Kühlschmiermittels in die Kanalstruktur und mindestens eine Austrittsöffnung zum Austritt des Kühlschmiermittels aus der Kanalstruktur auf, wobei mindestens in einem ersten Kanal der Kanalstruktur ein Filterelement mit einer Filterstruktur zur Sperrung eines Transports durch das Kühlschmiermittel transportierter fester Teilchen angeordnet ist und das Filterelement als Behälter zur Bevorratung der am Transport gesperrten festen Teilchen ausgebildet ist. Die sich daraus ergebenden Vorteile entsprechen denen des Schneidelementhalters nach der vorliegenden Offenbarung.

An dieser Stelle wird ausdrücklich festgehalten, dass der Halter zum Einspannen eines Schneidelementhalters im Sinne der vorliegenden Offenbarung, also einem mit dem Filterelement nach dieser Offenbarung, und/oder eines anderen (allgemeineren) Schneidelementhalters, zum Beispiel ohne Filterelement sowie mit und/oder ohne interne Kanalstruktur, ausgebildet sein kann. Soweit im Folgenden bezüglich des Halters nach dieser Offenbarung die Rede von einem Schneidelementhalter ist, sind beide Arten eines solchen damit gemeint. Die Verwendung eines bestimmten Artikels, zum Beispiel "die" Austrittsöffnung, bedeutet demnach, dass bei der anderen (allgemeineren) Variante des Schneidelementhalters das entsprechende Merkmal, nach dem genannten Beispiel also die Austrittsöffnung, des Schneidelementhalters nach dieser Offenbarung und sich daraus insoweit ergebende weitere Merkmale, nach dem genannten Beispiel also die interne Kanalstruktur, analog realisiert sind.

Die Austrittsöffnung des Halters kann zum Beispiel im Bereich der Einspannvorrichtung angeordnet sein, um eine Übergabe des Kühlschmiermittels von der Kanalstruktur des Halters an die Kanalstruktur des Schneidelementhalters bereitzustellen. Eine solche Übergabe kann dadurch realisiert werden, dass die Austrittsöffnung des Halters mit der Eintrittsöffnung des Schneidelementhalters überlappt, vorzugsweise fluchtet. Alternativ oder ergänzend kann die Austrittsöffnung des Halters aber auch derart angeordnet sein, dass das Kühlschmiermittel in Richtung der Ausnehmung des Schneidelementhalters austritt. Wenn die Austrittsöffnung im Bereich der Einspannvorrichtung angeordnet ist, ist sie vorzugsweise in Form einer Längsnut ausgebildet, so dass eine Übergabe des Kühlschmiermittels an den Schneidelementhalter innerhalb eines durch eine Erstreckung der Längsnut definierten Längsachsenpositionsbereichs erfolgen kann.

Das Filterelement des Halters ist dem Filterelement des hierin offenbarten Schneidelementhalters und damit der entsprechenden Weiterbildungen entsprechend aufgebaut. Insoweit sind die Weiterbildungen des Halters nach den von Anspruch 8 abhängigen Ansprüchen durch die Offenbarung des Filterelements des Schneidelementhalters nach dieser Offenbarung offenbart, mit dem Unterschied, dass das Filterelement des Halters in dem ersten Kanal der Kanalstruktur des Halters angeordnet ist. Die Kanalstruktur des Halters ist der Kanalstruktur des hierin offenbarten Schneidelementhalters entsprechend aufgebaut. Insoweit sind die Weiterbildungen des Halters nach den von Anspruch 8 abhängigen Ansprüchen durch die Offenbarung der Kanalstruktur des Schneidelementhalters nach dieser Offenbarung offenbart.

Die Einspannvorrichtung kann zum Beispiel dadurch gebildet werden, dass diese einen verstellbaren Spannklotz, der in einer vorgegebenen Endposition gegen den Schneidelementhalter gepresst wird, umfasst, so dass dieser reibschlüssig in und/oder an dem Halter gelagert ist.

Gemäß einer Weiterbildung des Halters weist er an einer Anschlussseite des Halters einen Schaft auf, welcher zum Einspannen des Halters in einem anderen Halter ausgebildet ist, weist die Anschlussseite die Eintrittsöffnung auf und mündet der erste Kanal in die Eintrittsöffnung. Dadurch kann das Filterelement besonders einfach montiert- und demontiert werden, weil die Anschlussseite besonders leicht zugänglich ist, ohne dass dabei das Schneidelement, wenn es in dem Halter eingespannt ist, entfernt werden müsste. Mit der Anschlussseite ist dabei insbesondere die Seite des Halters gemeint, welche für den Anschluss dessen an eine Werkzeugmaschine und eine externe Kühlschmiermittelquelle vorgesehen ist.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische schematische Transparentdarstellung eines Schneidelementhalters nach einer ersten Ausführungsform in Blickrichtung von schräg oben rechts;
- Fig. 2:: eine perspektivische schematische Transparentdarstellung des Schneidelementhalters der ersten Ausführungsform im Bereich seiner Ausnehmung mit darin eingespannter Schneidplatte in Blickrichtung von schräg oben rechts;
- Fig. 3:: eine schematische Transparentdarstellung des Schneidelementhalters der ersten Ausführungsform in Draufsicht;
- Fig. 4:: eine schematische Transparentdarstellung des Schneidelementhalters der ersten Ausführungsform im Längsschnitt gemäß der Schnittlinie IV aus Fig. 3;
- Fig. 5:: eine schematische Transparentdarstellung des Schneidelementhalters der ersten Ausführungsform im Querschnitt gemäß der Schnittlinie V aus Fig. 3;
- Fig. 6:: eine perspektivische schematische Darstellung des in dem Schneidelementhalter der ersten Ausführungsform eingebauten Filterelements in Blickrichtung von schräg oben;
- Fig. 7:: eine perspektivische schematische Darstellung des Filterelements aus Fig. 6 in Blickrichtung von schräg unten;
- Fig. 8:: eine perspektivische schematische Darstellung des Filterelements aus Fig. 6 in einer Seitenansicht;
- Fig. 9:: eine perspektivische schematische Darstellung eines in dem Schneidelementhalter der ersten Ausführungsform dem Filterelement aus Fig. 6 analog einbaubaren Filterelements in Blickrichtung von schräg oben;
- Fig. 10:: eine perspektivische schematische Darstellung des Filterelements aus Fig. 9 in Blickrichtung von schräg unten;
- Fig. 11:: eine perspektivische schematische Darstellung des Filterelements aus Fig. 9 in einer Seitenansicht;

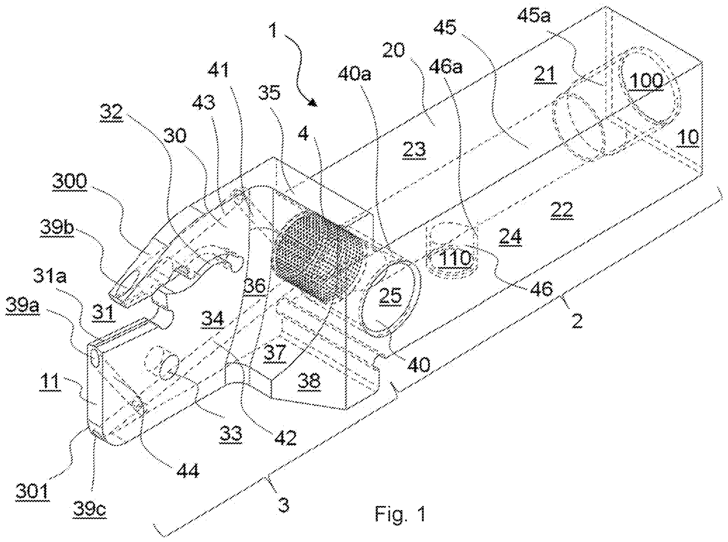

- Fig. 1.2:: eine perspektivische schematische Transparentdarstellung eines Halters mit dem darin aufgenommenen Schneidelementhalter nach der ersten Ausführungsform in Blickrichtung von schräg oben links;

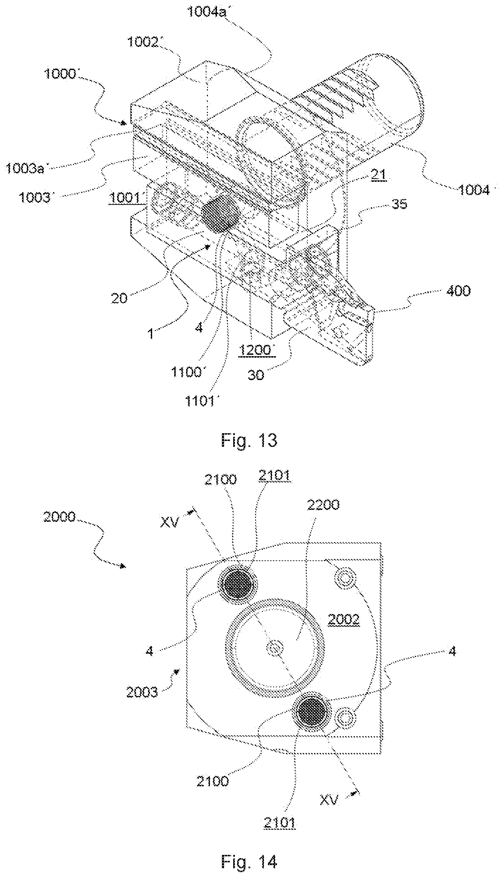

- Fig. 13:: eine perspektivische schematische Transparentdarstellung eines Halters nach einer ersten Ausführungsform mit dem in dem Halter aufgenommenen Schneidelementhalter nach Fig. 1, welcher ohne Filterelement dargestellt wird, in Blickrichtung von schräg oben links;
- Fig. 14:: eine schematische Rückseitenansicht eines Halters nach einer zweiten Ausführungsform;

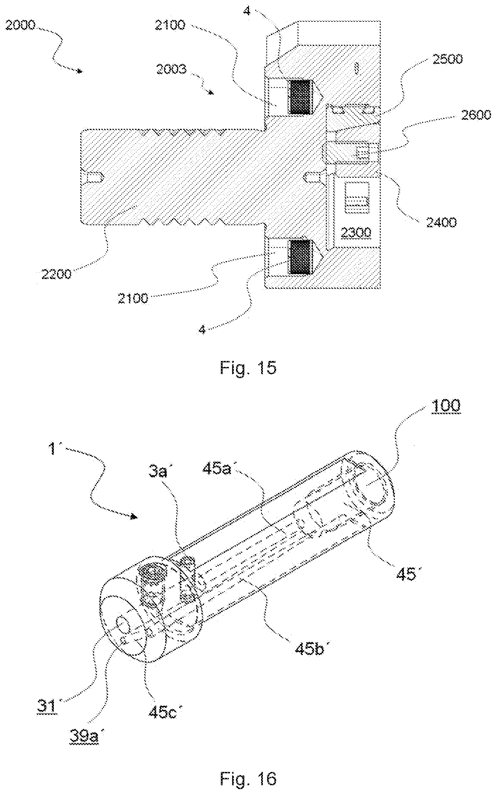

- Fig. 15:: eine Schnittdarstellung des Halters nach Fig. 14 gemäß der Schnittlinie XV aus Fig. 14;
- Fig. 16:: eine perspektivische schematische Transparentdarstellung eines Schneidelementhalters nach einer zweiten Ausführungsform in Blickrichtung von schräg oben rechts;

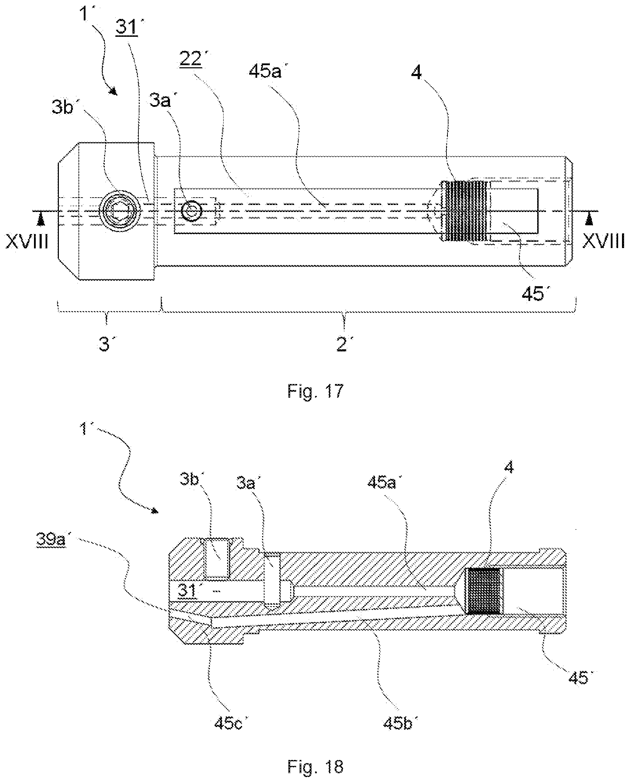

- Fig. 17:: eine schematische Transparentdarstellung des Schneidelementhalters der zweiten Ausführungsform in Draufsicht;
- Fig. 18:: eine schematische Transparentdarstellung des Schneidelementhalters der zweiten Ausführungsform im Längsschnitt gemäß der Schnittlinie XVIII aus Fig. 17;

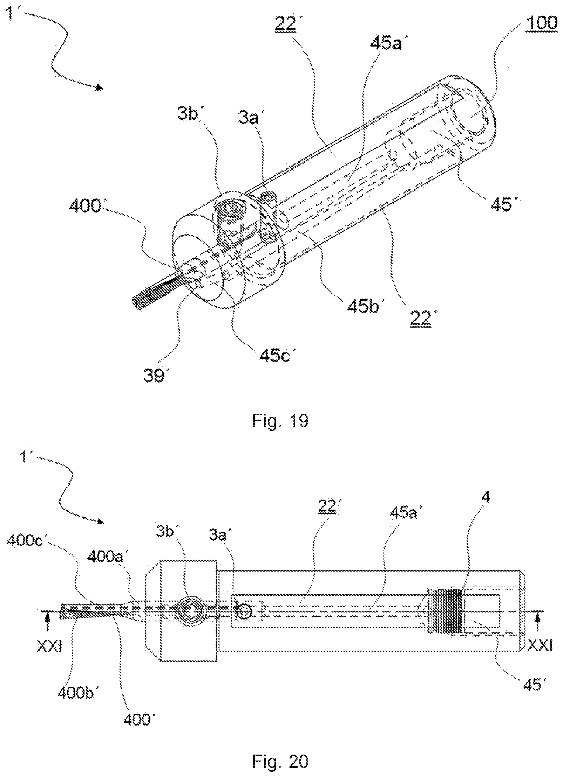

- Fig. 19:: eine perspektivische schematische Transparentdarstellung des Schneidelementhalters nach der zweiten Ausführungsform mit einem darin aufgenommenen Schneidelement in Blickrichtung von schräg oben rechts;
- Fig. 20:: eine schematische Transparentdarstellung des Schneidelementhalters der zweiten Ausführungsform mit dem darin aufgenommenen Schneidelement in Draufsicht;

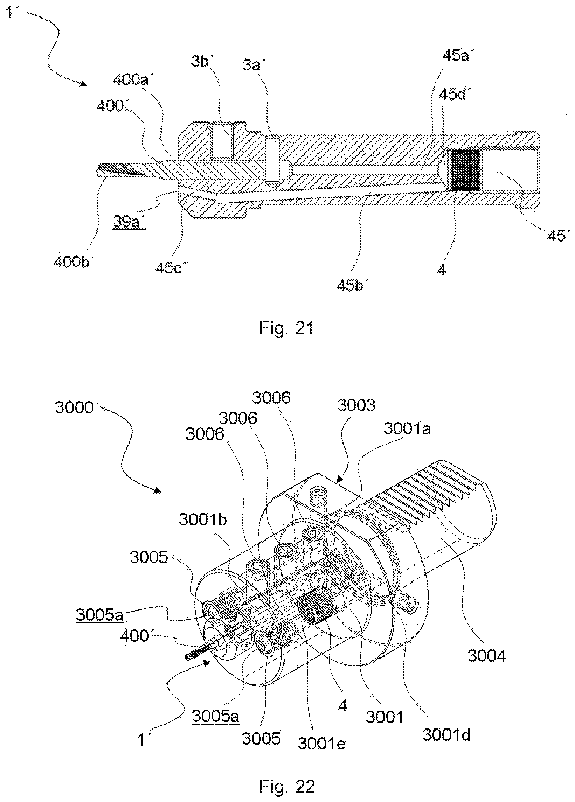

- Fig. 21:: eine schematische Transparentdarstellung des Schneidelementhalters der zweiten Ausführungsform mit dem darin aufgenommenen Schneidelement im Längsschnitt gemäß der Schnittlinie XXI aus Fig. 20;
- Fig. 22:: eine perspektivische schematische Transparentdarstellung eines Halters nach einer dritten Ausführungsform mit dem darin aufgenommenen Schneidelementhalter nach der zweiten Ausführungsform und dem in diesem aufgenommenen Schneidelement in Blickrichtung von schräg oben rechts;

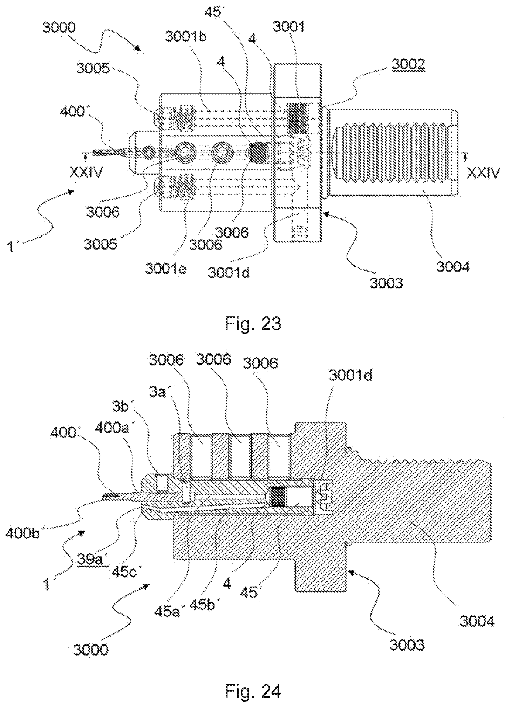

- Fig. 23:: eine schematische Transparentdarstellung des Halters nach der dritten Ausführungsform mit dem darin aufgenommenen Schneidelementhalter nach der zweiten Ausführungsform und dem in diesem aufgenommenen Schneidelement in Draufsicht;
- Fig. 24:: eine schematische Transparentdarstellung des Halters nach der dritten Ausführungsform mit dem darin aufgenommenen Schneidelementhalter nach der zweiten Ausführungsform und dem in diesem aufgenommenen Schneidelement im Längsschnitt gemäß der Schnittlinie XXIV aus Fig. 23;

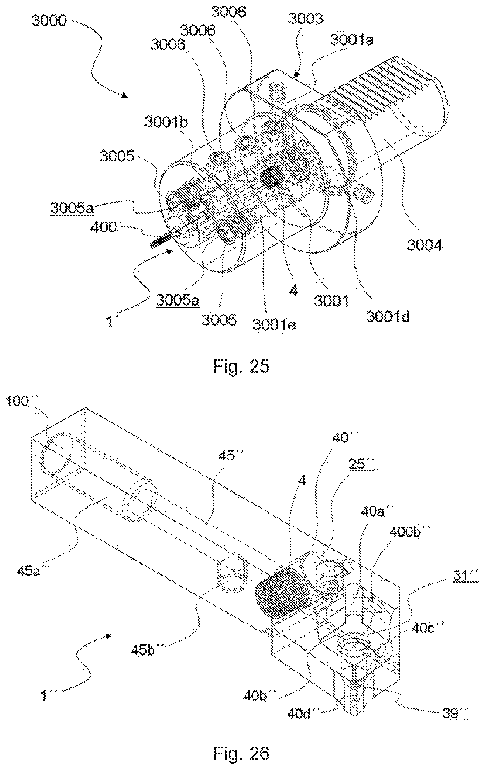

- Fig. 25:: eine perspektivische schematische Transparentdarstellung eines Halters und mit dem darin aufgenommenen Schneidelementhalter nach der zweiten Ausführungsform und dem in diesem aufgenommenen Schneidelement in Blickrichtung von schräg oben rechts;
- Fig. 26:: eine perspektivische schematische Transparentdarstellung eines Schneidelementhalters nach einer dritten Ausführungsform in Blickrichtung von schräg oben links;

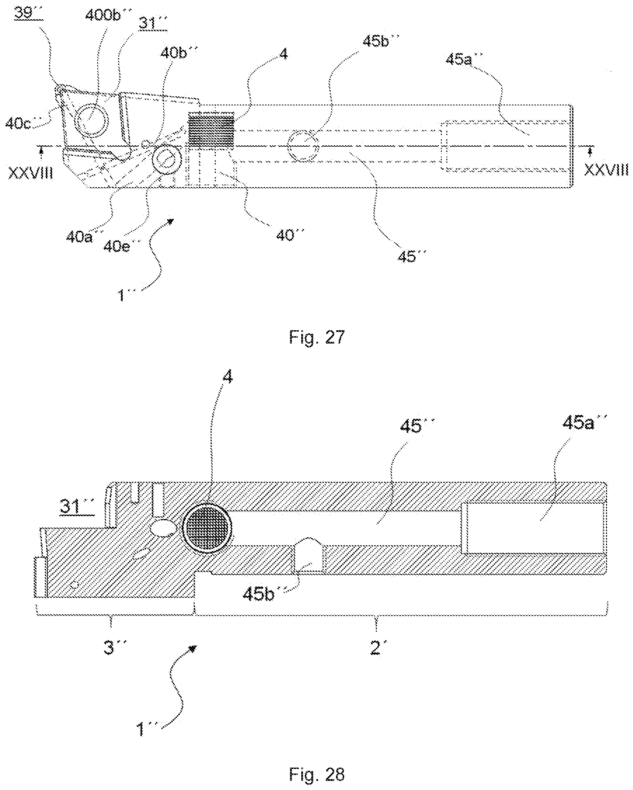

- Fig. 27:: eine schematische Transparentdarstellung des Schneidelementhalters der dritten Ausführungsform in Draufsicht;
- Fig. 28:: eine schematische Transparentdarstellung des Schneidelementhalters der dritten Ausführungsform mit dem darin aufgenommenen Schneidelement im Längsschnitt gemäß der Schnittlinie XXVIII aus Fig. 27;

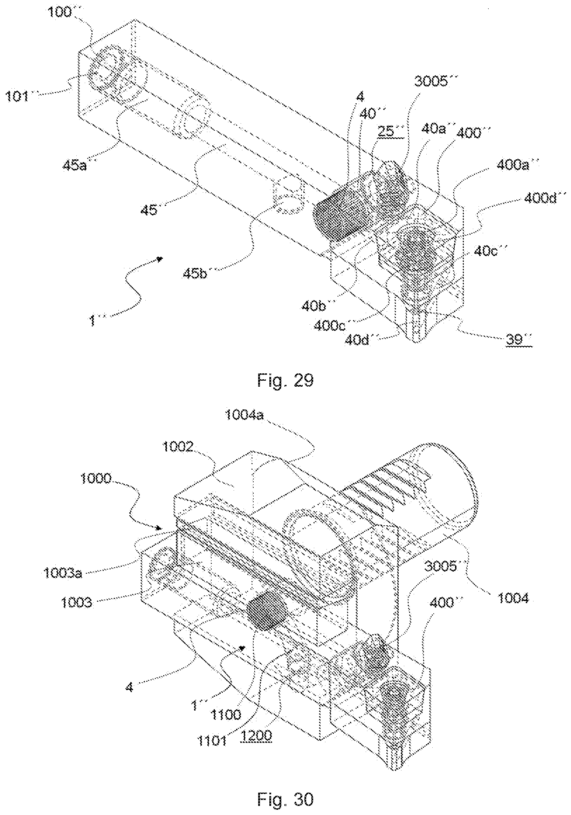

- Fig. 29:: eine perspektivische schematische Transparentdarstellung des Schneidelementhalters nach der dritten Ausführungsform mit einem darin aufgenommenen Schneidelement in Blickrichtung von schräg oben links;
- Fig. 30:: eine perspektivische schematische Transparentdarstellung des Halters nach der ersten Ausführungsform mit dem darin aufgenommenen Schneidelementhalter nach der dritten Ausführungsform in Blickrichtung von schräg oben links;

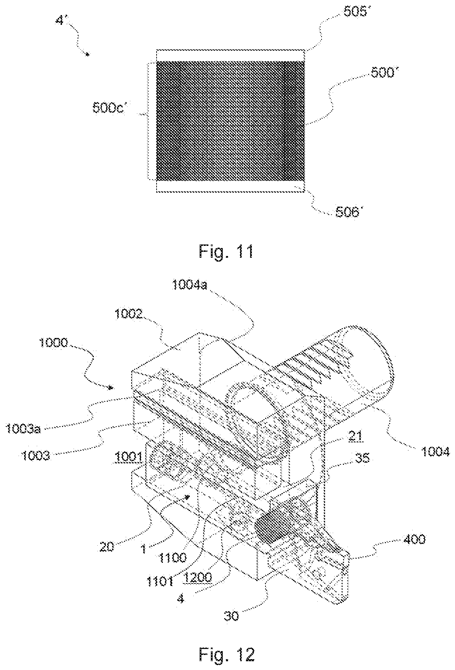

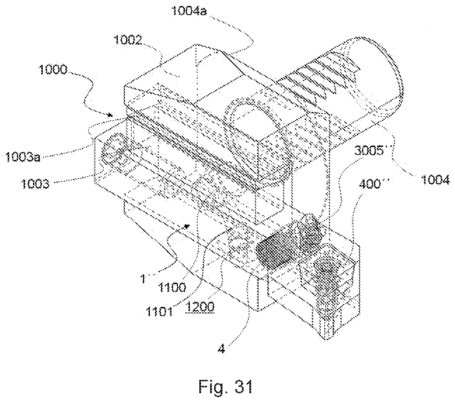

- Fig. 31:: eine perspektivische schematische Transparentdarstellung des Halters aus Fig. 12 mit dem darin aufgenommenen Schneidelementhalter nach der dritten Ausführungsform in Blickrichtung von schräg oben links.

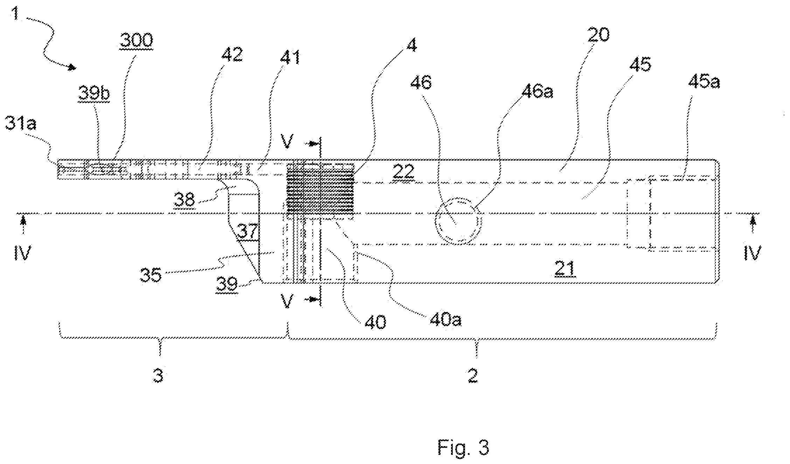

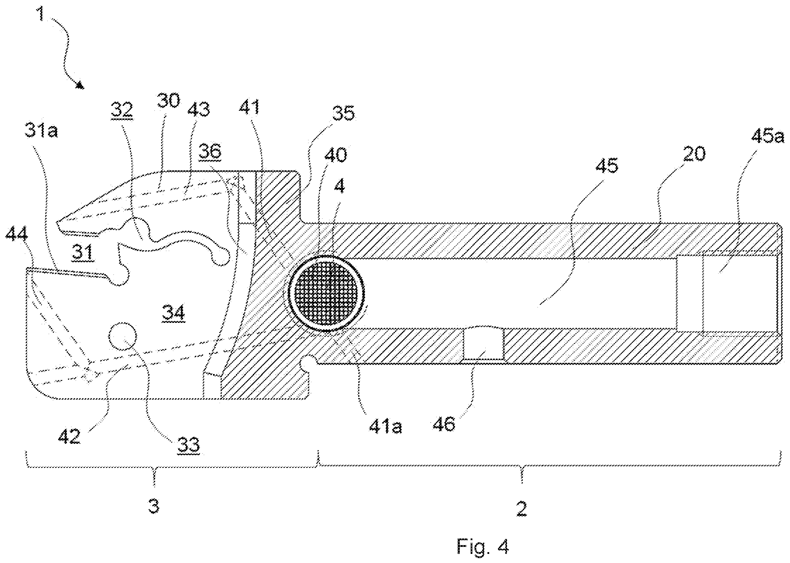

In den Fig. 1 bis Fig. 31 werden gleiche, ähnliche oder gleichwirkende Elemente mit identischen Bezugszeichen bezeichnet und auf eine wiederholte Beschreibung dieser Elemente wird in der nachfolgenden Beschreibung vermieden, um Redundanzen zu vermeiden. Verdeckte Kanten sowie der innere Aufbau von Bauteilen werden durch gestrichelte Linien dargestellt, sichtbare Kanten und damit der äußere Aufbau von Bauteilen durch durchgezogene Linien.

Fig. 1 bis 5 zeigen schematische Darstellungen eines Schneidelementhalters 1 nach einer ersten Ausführungsform.

In Fig. 1 ist besonders gut ersichtlich, dass der Schneidelementhalter 1 funktionell in einen Einspannabschnitt 2 und einen Werkzeugabschnitt 3 unterteilt ist. Im Bereich des Einspannabschnitts 2 befindet sich ein rechteckiger Schaft 20. Der Schaft 20 dient dazu, dass der Schneidelementhalter 1 in einem Halter, zum Beispiel einem Halter gemäß Fig. 12, auf welchen weiter unten näher eingegangen wird, eingespannt werden kann, indem gegen eine obere Seitenfläche 21 des Schafts 20 ein Spannklotz des Halters gepresst wird und eine der oberen Seitenfläche 21 diametral gegenüberliegende untere Seitenfläche 22 des Schafts 20 dadurch gegen eine Auflagefläche des Halters gepresst wird. Auf diese Weise lässt sich der Schneidelementhalter 1 in dem Halter reibschlüssig arretieren.

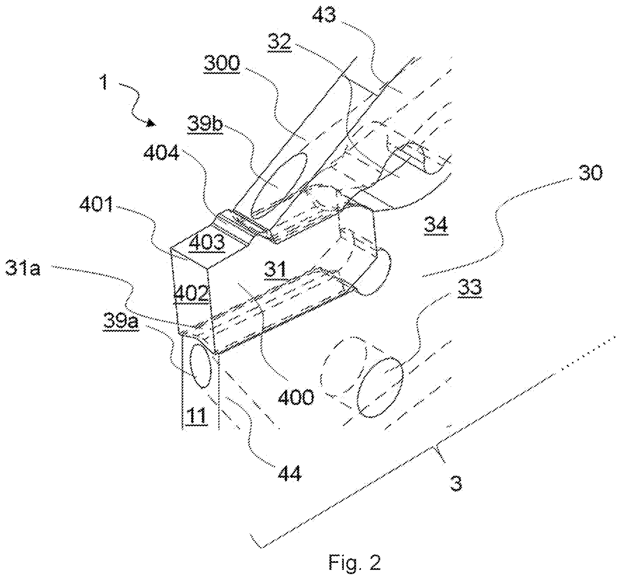

Wenn der Schneidelementhalter 1 über den Schaft 20 derart eingespannt ist, ist zum Beispiel eine Seitenfläche 23 des Schneidelementhalters 1, welche sich von einer mit einer hinteren Stirnseitenfläche 10 des Schneidelementhalters 1 gebildeten Ecke bis zu einer mit einer vorderen Stirnseitenfläche 11 des Schneidelementhalters 1 gebildeten Ecke erstreckt, dem Halter abgewandt und eine der Seitenfläche 23 diametral gegenüberliegende Seitenfläche 24 des Schneidelementhalters 1, welche sich von einer anderen mit der Stirnseitenfläche 10 gebildeten Ecke bis zu einer mit einer konkaven Fläche 38, auf welche weiter unten Bezug genommen wird, des Werkzeugabschnitts 3 gebildeten Ecke erstreckt, dem Halter zugewandt. Sonach lässt sich der Werkzeugabschnitt 3 dadurch beschreiben, dass vorne ein plattenförmiger Vorsprung 30 konstanter Breite ausgebildet ist, der durch eine Schneidelementaufnahme 31, welche auch als Schneidelementsitz bezeichnet werden kann, und einen daran anschließenden, ondulierten Schlitz 32 sowie eine dazu beabstandete Bohrung 33 unterbrochen ist. Mit anderen Worten ausgedrückt ist der Vorsprung 30 eine Platte, die die Schneidelementaufnahme 31, den Schlitz 32 und die Bohrung 33 aufweist; auf die Funktion der Schneidelementaufnahme 31, durch welche ein darin aufgenommenes Schneidelement gegen eine dachförmige Struktur 31a des Vorsprungs 30 gepresst wird, indem der Vorsprung 30 oberhalb des Schlitzes 32 als Klemmfinger ausgebildet ist, des Schlitzes 32 und der Bohrung 33 wird Bezug nehmend auf Fig. 2 näher eingegangen, auf die interne Kanalstruktur und diese zugeordnete Öffnungen im Bereich des Vorsprungs 30 weiter unten.

Der Vorsprung 30 ist schmaler als der Schaft 20. Danach kann der Vorsprung 30 als Stechklinge und der Schneidelementhalter 1 als Monoblockwerkzeug bezeichnet werden. Dadurch werden durch den Schneidelementhalter 1 und eine in der Schneidelementaufnahme 31 aufgenommene Schneidplatte, welche eine Schneidkante aufweist, ein Werkzeug zum Ein- und/oder Abstechen eines rotierenden Werkstücks bereitgestellt, indem das solchermaßen bereitgestellte Werkzeug mit der Stirnseitenfläche 11 und der Schneidkante der Schneidplatte voran in das Werkstück senkrecht zu einer Drehachse dessen im Sinne einer Stechbewegung bewegt wird.

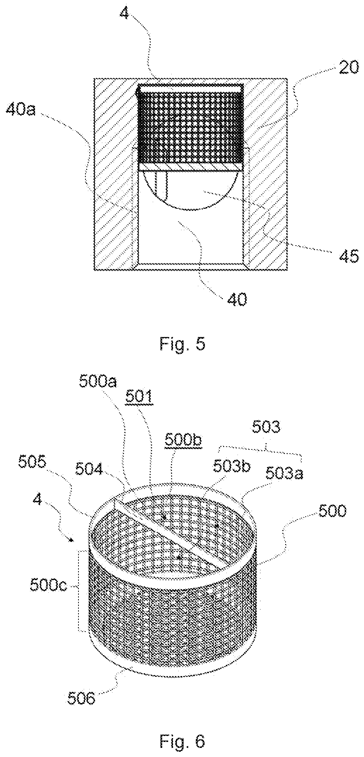

Eine besonders zweckmäßige Funktion des Schneidelementhalters 1 besteht darin, dass dieser als Gehäuse für ein Filterelement 4, welches für eine Abscheidung von Spänen aus einem flüssigen Kühlschmiermittel dient, was auch als Filtration der Späne oder Sperrung eines Transport der durch das Kühlschmiermittel transportierten Späne bezeichnet werden kann, vorgesehen ist, das Filterelement 4 also ein internes Bauteil des Schneidelementhalters 1 ist; eine Filterstruktur des Filterelements 4 ist in Fig. 1, 3, 4 und 5 grob schematisch, exemplarisch und anhand verschiedener Beispiele des Filterelements 4 und eines alternativen Filterelements 4' im Detail insbesondere in den Fig. 6 bis 11 schematisch dargestellt. Das Kühlschmiermittel dient zugleich einer Schmierung der Schneidplatte bei einem Kontakt mit dem Werkstück beim Ein- und/oder Abstechen. Diese besondere Zweckmäßigkeit des Schneidelementhalters 1 tritt insbesondere dann hervor, wenn ein Kühlschmiermittelstrom des Kühlschmiermittels durch den Schneidelementhalter 1 von einer Eintrittsöffnung 25, welche der konkaven Fläche 38 näher ist als der Stirnseitenfläche 10, die Seitenfläche 24 unterbricht und somit als eine seitliche Eintrittsöffnung bezeichnet werden kann, für das Kühlschmiermittel nach den Austrittsöffnungen 39a, 39b und 39c des Vorsprungs 30 für das Kühlschmiermittel betrachtet wird. Die Position der Eintrittsöffnung 25 kann demnach derart beschrieben werden, dass diese sich im Wesentlichen im Bereich des Schafts 20 befindet. Die Austrittsöffnung 39a unterbricht die Stirnseitenfläche 11, die Austrittsöffnung 39b eine Fläche 300 des Vorsprungs 30, welche in Richtung auf die dachförmige Struktur 31a geneigt ist, und die Austrittsöffnung 39c eine konvexe Fläche 301 des Vorsprungs 30, welche der Stirnseitenfläche 11 benachbart ist.

Nachdem das Kühlschmiermittel in die Eintrittsöffnung 25 eingetreten ist, zum Beispiel nachdem das Kühlschmiermittel nach dem Austritt aus den Austrittsöffnungen 39a bis 39b ausgetreten, gesammelt und sodann mithilfe einer Kühlschmiermittelpumpe der Eintrittsöffnung 25 zugeführt wurde, was als Rezyklieren des Kühlschmiermittels bezeichnet werden kann, tritt dieses in einen internen Kanal 40 des Schneidelementhalters 1 ein. Der interne Kanal 25 ist zylindrisch geformt und verläuft senkrecht zu der Seitenfläche 24, dementsprechend wird das Kühlschmiermittel senkrecht zur Seitenfläche 24 und damit senkrecht zu der parallel dazu orientierten Seitenfläche 34 geleitet. Der Kanal 40 endet bevor er die Seitenfläche 23 durchstoßen würden, so dass auf diese Weise ein bezüglich der durch den Kanal definierten (axialen) Strömungsrichtung des Kühlschmiermittels eine stirnseitige Wandung durch den Schneidelementhalter 1 gebildet wird. Der Kanal 40 ist in einem Bereich konstanter sowie maximaler Breite des Schneidelementhalters 1 angeordnet, und zwar im Wesentlichen in dem Schaft 20 und zu einem geringeren Teil in dem Übergangselement 35.

In dem Kanal 40 ist das Filterelement 4 angeordnet, indem es durch die Öffnung 25 in den Kanal 40 hineingeschoben ist, so dass hinreichend Platz in dem Kanal 40 vorhanden ist, dass in ein Innengewinde 40a des Kanals 40 und damit des Schneidelementhalters 1 ein korrespondierendes Gewinde eines Kühlschmiermittelschlauchs oder eines anderen Kühlschmiermitteltransportmittels eingeschraubt werden kann.

Das Filterelement 4 weist an einer der Öffnung 25 zugewandten Seite eine Öffnung auf, durch welche das Kühlschmiermittel und darin enthaltene Späne in das Filterelement 4 eintreten können, ohne dass eine Filterstruktur des Filterelements 4, welche eine der Öffnung gegenüberliegende Stirnseite des Filterelements 4 und einen Innenraum des Filterelements 4 begrenzt, einen solchen Eintritt im Sinne einer Filtration des Kühlschmiermittels hemmen würde. Ein Austritt der Späne aus dem Filterelement 4 wird in Strömungsrichtung des Kühlschmiermittels dadurch gesperrt, dass die Filterstruktur des Filterelements 4 einen zylindrischen Innenraum des Filterelements 4 in tangentialer Richtung umgibt und ein der Öffnung 25 abgewandtes Ende des Filterelements 4 im Sinne eines Behälterbodens begrenzt. Die Späne können sich also in dem Innenraum ansammeln, bis sie darin ein Volumen einnehmen, welches größer ist als das durch den Innenraum definierte Volumen eines Filterelements 4. Das Filterelement 4 dient also als Behälter für die darin angesammelten Späne. Die Späne können dadurch aus dem Kanal 40 entfernt werden, dass das Filterelement 4 aus dem Kanal 40 entfernt wird. Wird das Filterelement 4 danach entleert, lässt sich das Filterelement 4 wieder in einer für eine Filtration des Kühlschmiermittels und Bevorratung der Späne geeigneten Weise in den Kanal 40 hineinschieben, nämlich gemäß der in Fig. 1 gezeigten Position des Filterelements 4 in dem Kanal 40. Der Kanal 41 geht in einen internen Kanal 43 des Schneidelementhalters 1 gleichen Durchmessers über, welcher in die Öffnung 39b mündet, so dass aus der Öffnung 39b ein gerichteter Kühlschmiermittelstrahl austritt. Der Kanal 42 geht in einen interner Kanal 44 gleichen Durchmessers ab, welcher in die Öffnung 39a mündet, so dass aus der Öffnung 39a ein gerichteter Kühlschmiermittelstrahl austritt. Der Kanal 42 mündet in die Öffnung 39c, so dass aus der Öffnung 39c ein gerichteter Kühlschmiermittelstrahl austritt.

Der Kanal 40 geht in einen internen Kanal 45 des Schneidelementhalters 1 quer dazu über, welcher mittig in dem Schaft 40 senkrecht zur Stirnseitenfläche 10 verläuft und dem Kanal 40 gleichen Durchmessers ist. An einem hinteren Ende des Kanals 45 mündet dieser achsparallel in einen Kanal 45a größeren Durchmessers, welcher ein Innengewinde aufweist und in eine der Eintrittsöffnung 25 analoge Eintrittsöffnung 100, die die Stirnseitenfläche 10 unterbricht, mündet. In das Innengewinde 45a kann ein Gewindestopfenelement eingeschraubt werden. Auf diese Weise kann der Kanal 45 bei einer bestimmungsgemäßen Verwendung des Schneidelementhalters 1 gegenüber einem Austritt des Kühlschmiermittels, welches über den Kanal 40 in den Kanal 45 gelangt, im Bereich der Eintrittsöffnung 100 hermetisch abgedichtet werden.

Der Kanal 45 geht in dem Schaft 20 in einen Kanal 46 quer dazu über, wobei der Kanal 46 dem Kanal 45 kleineren Durchmessers ist, der Fläche 22 senkrecht ist und in eine Eintrittsöffnung 110, welche die Seitenfläche 22 unterbricht, mündet. Der Kanal 46 kann dem Kanal 45 analog mit einem in Fig. 1 nicht dargestellten Gewindestopfenelement hermetisch abgedichtet werden, indem das Gewindestopfenelement in ein Innengewinde 46a des Kanals 46 geschraubt ist. Eine solche Abdichtung ist besonders zweckmäßig, wenn die Kühlschmiermittelversorgung des .Schneidelementhalters 1 allein über die Öffnung 25 oder die Öffnungen 25 und 100 oder die Öffnung 100 erfolgt.

An dieser Stelle wird festgehalten, dass die Kanäle 40, 41, 42, 43, 44, 45, 45a und 46 eine interne Kanalstruktur des Schneidelementhalters 1 bilden, was auch als innere Kanalstruktur bezeichnet werden kann, die Kanäle 43 und 44 der Aufnahme 31 benachbart sind und die Öffnungen 39a bis 39c für einen Kühlschmiermittelaustritt im Bereich des Vorsprungs 30 und damit des Werkzeugabschnitts 3 sorgen, so dass beim Ein- und/oder Abstechen das durch das Filterelement 4 oder ein diesem analoges Filterelement filtrierte Kühlschmiermittel in den zu bearbeitenden Bereich eines sich drehenden Werkstücks, dies durch die Öffnungen 39a bis 39c und die darin mündenden Kanäle 44, 43 und 42, und in den Bereich einer in der Aufnahme 31 aufgenommenen Schneidplatte, dies durch die Öffnungen 39a und 39b sowie die darin mündenden Kanäle 44 und 43, gelangt.

In der in Fig. 2 ersichtlichen schematischen Transparent- sowie Detaildarstellung des Schneidelementhalters 1 ist eine Einbausituation ersichtlich, wonach eine Schneidplatte 400, welche eine gerade Schneidkante 401, eine ebene Freifläche 402 und eine ebene Spanfläche 403 aufweist, in dem Schneidelementsitz 31 kraftschlüssig aufgenommen ist; verdeckte Kanten sowie der innere Aufbau des Schneidelementhalters 1 sind durch gestrichelte Linien dargestellt, sichtbare Kanten und damit der äußere Aufbau des Schneidelementhalters 1 durch durchgezogene Linien. Kraftschlüssig deshalb, weil der Vorsprung 30 oberhalb des ondulierten Schlitzes 32 als Klemmfinger ausgeformt ist, der

Vorsprung 30 bzw. der Klemmfinger mithilfe eines nicht dargestellten Hebelwerkzeugs, dessen Zapfen in die Bohrung 33 und den Schlitz 32 eingreifen können, in Richtung von der dachförmigen Struktur 31 weg elastisch aufgeweitet wird, sodann die Schneidplatte 400 in die Aufnahme 31 geschoben wird, bis diese den Vorsprung 30 an einer der Freifläche 402 gegenüberliegenden Fläche kontaktiert und das Hebelwerkzeug in eine zum Aufweiten des Klemmfingers vorgesehene Drehrichtung entgegensetzt gedreht wird und der Klemmfinger auf diese Weise entlastet wird, so dass die Schneidplatte 400 gegen die dachförmige Struktur 31a durch den Klemmfinger elastisch rückfedernd gepresst wird; das Hebelwerkzeug wird anschließend entfernt. Die Schneidplatte 400 weist der Spanfläche 403 benachbart einen Vorsprung 404 auf, welcher als axialer Anschlag der Schneidplatte 400 gegen den Vorsprung 30 im Bereich seines Klemmfingers dient. Die Schneidplatte 400 ist durch ein Lot mit dem Vorsprung 30 im Bereich der Aufnahme 31 stoffschlüssig verbunden, wobei das Lot in einem flüssigen Zustand vor oder während der beschriebenen Aufweitung des Vorsprungs 30 auf die Schneidplatte 400 oder die die Schneidplatte kontaktierenden Flächen, also auf die dachförmige Struktur 31a und die der Schneidplatte zugewandte Fläche des Klemmfingers, der Aufnahme 31 aufgetragen wird.

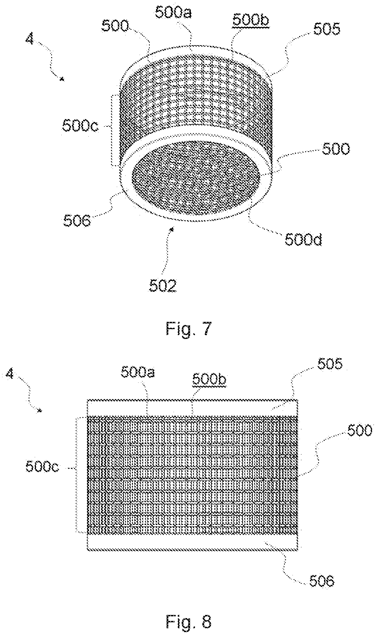

Eine Darstellung des Filterelements 4 wird im Detail in den Fig. 6 bis Fig. 8 in einem ausgebauten Zustand des Filterelements 4 gezeigt. Daraus ist ersichtlich, dass das Filterelement 4 eine aus einem Drahtgewebe konstanter Maschenweite gebildete Filterstruktur 500 aufweist, welche einen Innenraum 501 des Filterelements 4 tangential als eine Filterumfangswandung 500c und an einem stirnseitigen Ende 502 des Filterelements 4 den Innenraum 501 als eine Filterbodenwandung 500d umgibt, letzteres ist insbesondere in Fig. 7 ersichtlich.

Zwischen miteinander verbundenen Drähten 500a der Filterstruktur 500 sind rechteckige Öffnungen 500b der Filterstruktur 500 gebildet, durch welche das Kühlschmiermittel austreten kann, wohingegen der Austritt in dem Kühlschmiermittel enthaltener Späne ab einer durch die Öffnungen 500b definierten Mindestgröße gesperrt ist. Der Begriff Maschenweite ist also als Größe der Öffnungen 500b zu verstehen. Die Drähte 500b bestehen zum Beispiel aus einem Stahl. Denkbar und auch möglich sind aber auch andere Materialien wie Kunststoffe,

Eine stirnseitige Öffnung 503 des Filterelements 4, welche insbesondere in Fig. 7 ersichtlich ist, dem ersten Ende 502 diametral gegenüberliegt und durch eine Querstrebe 504 in zwei halbkreisförmige Öffnungen 503a und 503b unterteilt ist, wird hingegen von der Filterstruktur 500 nicht umgeben. Danach wird das Kühlschmiermittel bei einem Eintritt in das Filterelement 4 über die Öffnung 503 bzw. die Öffnungen 503a und 503b in den Innenraum 501 durch die Filterstruktur 500 nicht filtriert und kann insoweit frei eintreten; die Querstrebe 504, auf welche weiter unten näher eingegangen wird, trägt angesichts der üblicherweise beim Ein- und/oder Abstechen erzeugten, bezüglich des Innendurchmessers des Kanals 40 relativ kleinen Späne nicht Wesentlich zur Filtration des Kühlschmiermittels bei.

Die Querstrebe 504, welche im Querschnitt rechtwinklig ist und als Öse wirkt, ist mit einem runden Rahmenelement 505 verbunden, welches die Öffnung 502 umrandet. Ein anderes rundes Rahmenelement 506 des Filterelements 4 umrandet die Filterbodenwandung 500d und verbindet die Filterumfangswandung 500c mit der Filterbodenwandung 500d rechtwinklig.

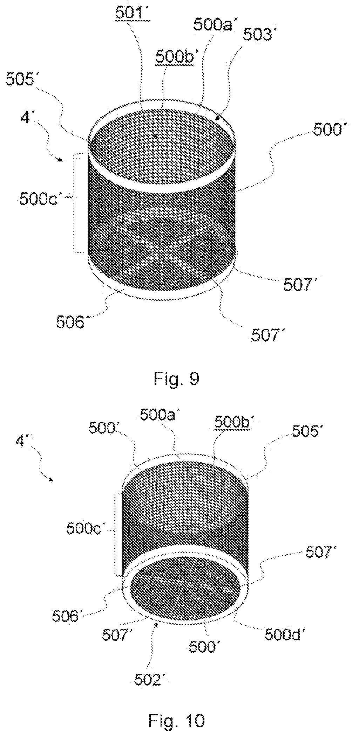

Das Rahrnenelement 505, das Rahmenelement 506 und die Querstrebe 504 bilden eine Rahmenstruktur des Filterelements 4, welche diesem zusätzlich Steifigkeit verleiht, insbesondere in radialer Richtung. Eine Darstellung eines Filterelements 4' wird im Detail in den Fig. 9 bis Fig. 11 gezeigt. Das Filterelement 4' kann dem Filterelement 4 analog in dem Kanal 40 oder 45 angeordnet werden, so dass dem Filterelement 4' analog das Kühlschmiermittel filtriert und die darin enthaltenen Späne in einem Innenraum 501' angesammelt werden. Mit dem Filterelement 4 ist daher in den Fig. 1 bis 31 zugleich das Filterelement 4' offenbart, soweit die Funktionsweise und Anordnung von diesem betroffenen ist. In den Fig. 9 bis 11 ist ersichtlich, dass das Filterelement 4' eine aus einem Drahtgewebe konstanter Maschenweite gebildete Filterstruktur 500' aufweist, welche den Innenraum 501' des Filterelements 4' tangential als eine Filterumfangswandung 500c' und an einem stirnseitigen Ende 502' des Filterelements 4' den Innenraum 501' als eine kreisförmige Filterbodenwandung 500d' umgibt, letzteres ist insbesondere in Fig. 10 ersichtlich. Zwischen miteinander verbundenen Drähten 500a' der Filterstruktur 500' sind rechteckige Öffnungen 500b' der Filterstruktur 500' gebildet, durch welche das Kühlschmiermittel austreten kann, wohingegen der Austritt in dem Kühlschmiermittel enthaltener Späne ab einer durch die Öffnungen 500b' definierten Mindestgröße gesperrt ist. Der Begriff Maschenweite ist also als Größe der Öffnungen 500b' zu verstehen. Die Drähte 500b' bestehen zum Beispiel aus einem Stahl. Denkbar und auch möglich sind aber auch andere Materialien wie Kunststoffe. Eine stirnseitige Öffnung 503' des Filterelements 4', welche insbesondere in Fig. 9 ersichtlich ist und dem ersten Ende 502' diametral gegenüberliegt, wird hingegen von der Filterstruktur 500' nicht umgeben. Danach wird das Kühlschmiermittel bei einem Eintritt in das Filterelement 4' über die Öffnung 503' in den innenraum 501' durch die Filterstruktur 500' nicht filtriert und kann insoweit frei eintreten. Ein Rahmenelement 505' umrandet die Öffnung 503'. Ein anderes Rahmenelement 506' des Filterelements 4' umrandet die Filterbodenwandung 500d' und verbindet die

Filterumfangswandung 500c' mit der Filterbodenwandung 500d rechtwinklig. Zwei senkrecht zueinander orientierte Querstreben 507', welche mit dem Rahmenelement 506' verbunden sind und insbesondere in Fig. 9 ersichtlich sind, kreuzen sich im Mittelpunkt der Filterbodenwandung 506 und kontaktieren diese dabei, so dass dadurch eine radial Versteifung des Rahmenelements 506' und damit des Filterelements 4' gebildet werden.

Das Rahmenelement 505', das Rahmenelement 506' und die Querstreben 507' bilden eine Rahmenstruktur des Filterelements 4', welche diesem zusätzlich Steifigkeit verleiht, insbesondere in radialer Richtung.

Fig. 12 zeigt eine perspektivische schematische Transparentdarstellung eines Halters 1000 mit dem darin aufgenommenen Schneidelementhalter 1 von schräg oben links; der detaillierte Aufbau sowie die Funktionsweise des Schneidelementhalters 1 sind in Fig. 1 bis 5 und der entsprechenden Figurenbeschreibung dazu offenbart, insoweit wird eine wiederholte Beschreibung dessen und die Verwendung der entsprechenden Bezugszeichen vermieden.

In Fig. 12 ist ersichtlich, dass der Schneidelementhalter 1 aus Fig. 1 mit der Schneidplatte 400 gemäß der Einbausituation aus Fig. 2 in einem Aufnahmeschlitz 1001 eines Blockkörpers 1002 des Halters 1000 vorgespannt gehaltert ist, was auch als Einspannung des Schneidelementhalters 1 bezeichnet werden kann. Denn ein Spannklotz 1003 des Halters 1000, welcher dadurch in Form und Funktionsweise eines Spannblocks ausgebildet ist, wird mithilfe eines Keilelements 1003a des Halters 1000 gegen die Fläche 21 gepresst, so dass der Schaft 20 auf diese Weise gegen den Blockkörper 1002 auf der davon gegenüberliegenden Seite gepresst wird. Es wird also eine reibschlüssige Arretierung des Schneidelementhalters 1 bereitgestellt. Der Blockkörper 1002, der Spannklotz 1003 und das Keilelement 1003a bilden dabei eine Aufnahmevorrichtung zur vorgespannten des Schneidelementhalters 1 und damit eine entsprechende Einspannvorrichtung.

Die Kühlschmiermittelversorgung des Schneidelementhalters 1 kann über eine interne Kanalstruktur des Halters 1000 realisiert werden, welche in dem Blockkörper 1002 ausgebildet ist, indem diese mit der Kanalstruktur des Schneidelementhalters 1 verbunden wird. So weist der Blockkörper 1002 einen internen Kanal 1100 auf, welcher in einen gekrümmten internen Kanal 1101 kleineren Durchmessers in dem Blockkörper 1002 übergeht und in einer Übergabeöffnung 1200 des Blockkörpers 1002 mündet. Das Kühlschmiermittel strömt also von dem Kanal 1100 in den Kanal 1101 und tritt schließlich aus der Übergabeöffnung 1200 an der Unterseite des Schneideelementhalters 1 aus, so dass die in Fig. 1 bis Fig. 5 beschriebene Kanalstruktur des Schneidelementhalters 1 durch einen Eintritt des Kühlschmiermittels in den Kanal 46 mit diesem versorgt werden kann und in dem Schneidelementhalter 1 durch dessen Filterelement 4 filtriert wird.

Der Halter 1000 weist an einer Anschlussseite 1004a, die durch eine Eintrittsöffnung für einen Eintritt des Kühlschmiermittels in den Kanal 1100 unterbrochen ist, einen Schaft 1004 auf, welcher auch als Vorsprung dieser bezeichnet werden kann, über welchen der Halter 1000 im Bereich des Schafts 1004 in einem Halter einer Werkzeugmaschine eingespannt werden kann, so dass der Halter 1000 und damit der Schneidelementhalter 1 mithilfe der Werkzeugmaschine auf ein sich rotierendes Werkstück senkrecht zu einer entsprechenden Rotationsachse zum Ein- und/oder Abstechen dessen zu bewegt werden können.

Fig. 13 zeigt eine perspektivische schematische Transparentdarstellung eines Halters 1000' nach einer ersten Ausführungsform, welcher abgesehen von dem darin aufgenommenen Filterelement 4 dem Halter 1000 aus Fig. 12 analog aufgebaut ist, mit dem darin aufgenommenen Schneidelementhalter 1, welcher ohne Filterelement 4 dargestellt wird, von schräg oben links. Der detaillierte Aufbau sowie die Funktionsweise des Schneidelementhalters 1 sind in Fig. 1 bis 5 und der entsprechenden Figurenbeschreibung dazu offenbart, insoweit wird eine wiederholte Beschreibung dessen und die Verwendung der entsprechenden Bezugszeichen vermieden; optional kann der Schneidelementhalter 1 nach Fig. 14 das Filterelement 4 gemäß der Einbausituation nach Fig. 12 aufweisen, so dass eine zweifache Filtration des Kühlschmiermittels dadurch bereitgestellt wird.

In Fig. 13 ist ersichtlich, dass der Schneidelementhalter 1 aus Fig. 1 mit der Schneidplatte 400 gemäß der Einbausituation aus Fig. 2 in einem Aufnahmeschlitz 1001' eines Blockkörpers 1002' des Halters 1000' vorgespannt gehaltert ist, was auch als Einspannung des Schneidelementhalters 1 bezeichnet werden kann. Denn ein Spannklotz 1003' des Halters 1000', welcher in Form und Funktionsweise eines Spannblocks ausgebildet ist, wird mithilfe eines Keilelements 1003a' des Halters 1000' gegen die Fläche 21 gepresst, so dass der Schaft 20 auf diese Weise gegen den Blockkörper 1002' auf der davon gegenüberliegenden Seite gepresst wird. Es wird also eine reibschlüssige Arretierung des Schneidelementhalters 1 bereitgestellt. So weist der Blockkörper 1002' einen internen Kanal 1100' auf, in welchem das Filterelement 4 dem Kanal 40 analog angeordnet ist, welcher in einen gekrümmten interner Kanal 1101' kleineren Durchmessers im Bereich des Filterelements 4 in dem Blockkörper 1002*'* übergeht und in einer Übergabeöffnung 1200 des Blockkörpers mündet. Das Kühlschmiermittel wird daher filtriert, bevor es in den Schneidelementhalter 1. eintritt, so dass dieser wie in Fig. 13 dargestellt ohne Filterelement 4 betrieben und zugleich eine Verstopfung dessen Kanalstruktur durch Späne vermieden werden kann.

Der Halter 1000' weist an einer Anschlussseite 1004a', die durch eine Eintrittsöffnung für einen Eintritt des Kühlschmiermittels in den Kanal 1100' unterbrochen ist, einen Schaft 1004' auf, über weichen der Halter 1000' im Bereich des Schafts 1004' in einem Halter einer Werkzeugmaschine eingespannt werden kann, so dass der Halter 1000' und damit der Schneidelementhalter 1 mithilfe der Werkzeugmaschine auf ein sich rotierendes Werkstück zum Ein- und/oder Abstechen dessen zu bewegt werden können. Fig. 14 zeigt eine schematische Rückseitenansicht eines Halters 2000 nach einer zweiten Ausführungsform, welcher den Haltern 1000 und 1000*'* analog zum Einspannen des Schneidelementhalters 1 ausgeformt ist und eine interne Kanalstruktur zur Kühlschmiermittelmittelversorgung des Schneidelementhalters 1 aufweist. Einen wesentlichen Teil dieser internen Kanalstruktur bilden zwei Kanäle 2100, welche in einem Spannblock 2003 des Halters 2000 in Form von Bohrungen senkrecht zu einer Anschlussseite 2002 gebildet sind. In den Kanälen 2100, welche in Eintrittsöffnungen 2101 münden, wodurch die Anschlussseite 2002 unterbrochen wird, sind zwei der Filterelemente 4 hineingeschoben angeordnet; die Funktionsweise der Filterelemente 4 entspricht der Bezug nehmend auf insbesondere Fig. 1 bis 5 beschriebenen Funktionsweise eines dieser. Den Haltern 1000 und 1000' analog ist an der Anschlussseite 2002 ein Schaft 2200 vorgesehen, über welchen der Halter 2000 im Bereich des Schafts 2200 in einem Halter einer Werkzeugmaschine eingespannt werden kann, so dass der Halter 2000 und damit ein darin aufgenommener Schneidelementhalter 1 mithilfe der Werkzeugmaschine auf ein sich rotierendes Werkstück senkrecht zu einer entsprechenden Rotationsachse zum Ein- und/oder Abstechen dessen zu bewegt werden können. Der Halter 2000 kann danach als radialer Halter 2000 bezeichnet werden, weil der Schaft 2200 senkrecht zu der axialen Richtung des Ein- und/oder Abstechens orientiert ist. Denkbar und auch möglich ist aber auch eine zu der axialen Richtung parallele Orientierung des Schafts 2200, wonach der Halter 2000 als axialer Halter 2000 bezeichnet werden kann.

Fig. 15 zeigt eine Schnittdarstellung des Halters 2000 gemäß der Schnittlinie XV aus Fig. 14. In Fig. 15 sind der innere Aufbau der Kanäle 2100 und die darin realisierte Anordnung der Filterelemente 4 besonders gut ersichtlich. Sonach weisen die Kanäle 2100 in Strömungsrichtung des Kühlschmiermittels betrachtet zunächst einen konstanten ersten Durchmesser und im Bereich eines Übergangs zu davon quer abzweigenden kleineren Kanälen, welche den Kanälen 1101 und 1101' analog in dem Spannblock 2003 verlaufen, einen kleineren konstanten Durchmesser auf. Der kleinere Durchmesser entspricht dem Außendurchmesser der Filterelemente 4, so dass diese, wie in Fig. 15 ersichtlich ist, abschnittsweise reibschlüssig in den Kanälen 2100 gelagert sind, wobei der nicht im Bereich des kleineren Durchmessers gelagerte Bereich der Filterelemente 4 in den Bereich größeren Durchmessers hineinragt. Dies kann als fliegende Lagerung der Filterelemente 4 in den Kanälen 2100 bezeichnet werden, wobei jeweils eine ringförmiger Spalt zwischen ihnen und den Kanälen 2100 gebildet wird.

In Fig. 15 ist außerdem ersichtlich, dass der Spannblock 2003 den Spannblöcken 1002 und 1002*'* analog einen Aufnahmeschlitz 2300 zur Aufnahme eines Schafts eines Schneidelementhalters, zum Beispiel des Schafts 20 des Schneidelementhalters 1, aufweist. In dem Aufnahmeschlitz 2300 sind ein Keilelement 2500 und ein relativ zu dem Keilelement 2500 beweglicher Spannklotz 2400 angeordnet; die Bewegung des Spannklotzes 2400 wird durch eine Keilflächenpaarung zwischen dem Spannklotz 2400 und dem Keilelement 2500 realisiert, indem der Spannklotz 2600 in Richtung auf den Schaft 2200 bewegt wird und dabei durch die Keilflächenpaarung Bezug nehmend auf die Zeichnungsebene der Fig. 15 nach unten bewegt wird, so dass die in diese Richtung bemessene innere Teilabmessung des Aufnahmeschlitzes 2300 kleiner wird. Dadurch kann also eine kraftschlüssige Arretierung des Schafts in dem Aufnahmeschlitz 2300 realisiert werden, so dass der Schaft und damit der Schneidelementhalter, zum Beispiel wie in den Fig. 12 und Fig. 13 exemplarisch ersichtlich ist, in dem Halter 2000 gehaltert wird.

Fig. 16 bis 18 zeigen verschiedene Darstellungen eines Schneidelementhalters 1*'* nach einer zweiten Ausführungsform, welcher im Unterschied zu dem Schneidelementhalter 1 nach den Fig. 1 bis 5 anstelle einer Ausnehmung 31 in Form eines Plattensitzes eine Ausnehmung in Form einer Bohrung 31' zur Aufnahme eines Schneidelements mit einem dementsprechend ausgeformten Trägerteil aufweist; in den Darstellungen der Fig. 16 und 17 wird aus Gründen der Übersichtlichkeit das Filterelement 4 nicht gezeigt, wobei es jedoch auch dort gemäß den Fig. 17 und 18 in einem hinteren Ende des Schneidelementhalters 1*'* angeordnet ist.

Fig. 19 bis 21 zeigen den Darstellungen nach den Fig. 16 bis 18 entsprechende Darstellungen des Schneidelementhalters 1' mit einem in der Bohrung 31' aufgenommenen Schneidelement 400', dessen zylindrischer Trägerteil 400a' in der Bohrung 31*'* angeordnet ist und dessen Schneidteil 400b einen im Vergleich zum Trägerteil 400a' kleineren Durchmesser hat und im vorderen Bereich davon zum Bohren und Drehen ins Volle ausgebildet ist.

Bezug nehmend auf die Fig. 17, 18, 20 und 21 ist daraus besonders gut ersichtlich, dass in einem ersten Kanal 45' des Schneidelementhalters 1' das Filterelement 4 angeordnet ist, dass das Kühlschmiermittel bei einem Eintritt von einer Eintrittsöffnung 100*'*und einem daran anschließenden Eintritt in den Kanal 45' durch das Filterelement 4 strömt, durch dessen Filterstruktur von in dem Kühlschmiermittel enthaltenen Spänen bis zu einer durch die Filterstruktur definierten Mindestgröße der Späne filtriert wird, einen sacklochförmigen Abschnitt durchströmt und sonach in filtrierter Weise in einen Kanal 45a' und einen davon verschiedenen Kanal 45b' eintritt.

Der Kanal 45a*'* ist dem Kanal 45' achsparallel angeordnet, sodass sich die Strömungsrichtung des Kühlschmiermittels nicht ändert; der Kanal 45' verjüngt sich konisch in Richtung auf die Bohrung 31', was auch als konischer Auslauf bezeichnet werden kann.

Der Kanal 45a*'* mündet in die Bohrung 31*'*, welche außerhalb des Trägerteils 400a' einen Kanal des Schneidelementhalters 1*'* bildet, so dass das Kühlschmiermittel in der Bohrung 31' in einen Kanal 400c*'* des Schneidelements 400' eintritt, so dass dieses aus diesem stirnseitig austreten kann.

Der Kanal 45' und der Kanal 45b' sind schräg zueinander angeordnet, so dass das Kühlschmiermittel umgelenkt wird. Der Kanal 45b' geht in einen Kanal 45c' schräg dazu über, so dass das Kühlschmiermittel aus diesem über eine Austrittsöffnung 39a' dementsprechend gerichtet aus dem Schneidelementhalter 1*'* zur Kühlschmiermittelversorgung des Schneidteils 400b*'* schräg austritt.

Die Kanäle 45', 45a', 45b' und 45c' und die Bohrung 31 im Bereich außerhalb des Trägerteils 400a' bilden demzufolge eine interne Kanalstruktur des Schneidelementhalters 1*'*, wobei der Strömungsquerschnitt der Kanäle 45a', 45b' und 45c' kleiner ist als der des Kanals 45' außerhalb seines konischen Auslaufs, wonach eine Präzisionsschmiermittelkühlung wie bei der ersten Ausführungsform realisiert wird.

Dem Schneidelementhalter 1 entsprechend weist der Schneidelementhalter 1' einen Einspannabschnitt 2' zum Einspannen in einem Halter auf, wie dieser zum Beispiel in den Fig. 22 bis 25 dargestellt wird; der Einspannabschnitt ist in Fig. 17 für die übrigen Figuren der zweiten Ausführungsform exemplarisch mit dem Bezugszeichen 2' versehen. Im Bereich des Einspannabschnitts 2' sind dazu zwei diametral gegenüberliegende Seitenflächen 22'des ansonsten zylindrischen Einspannabschnitts 2' vorgesehen.

Ein Abschnitt 3', in welchem die Bohrung 31' im Wesentlichen verläuft, kann der ersten Ausführungsform entsprechend als Werkzeugabschnitt 3' bezeichnet werden.

Ein Gewindebolzen 3a' dient als axialer Anschlag für das Schneidelement 400', so dass dieses im Bereich des Trägerteils 400a' in einer vorgegebenen axialen Position in der Bohrung 31' positioniert werden kann. Ein anderer Gewindebolzen 3b*'* dient einerseits als Verdrehsicherung für das Schneidelement 400' im Bereich des Trägerteils 400a', indem es mit diesem in Eingriff bringbar ist, und andererseits dazu, den Trägerteil 400a' in der Bohrung 31' quer dazu vorgespannt zu lagern, indem es gegen das Trägerteil gepresst wird.

Die Späne sammeln sich wie bei der ersten Ausführungsform in dem Filterelement 4 an, bis ein durch dieses vorgegebenes Bevorratungsvolumen erreicht wird. Das Filterelement 4 kann sodann oder zu einem früheren Zeitpunkt aus dem Kanal 45' entnommen werden, so dass die Späne aus diesem und damit aus der Kanalstruktur des Schneidelementhalters 1' entnommen werden können.

Anstelle des Filterelements 4 kann auch das Filterelement 4' in den Kanal 45*'* gemäß den Fig. 17, 18, 20 und 21 eingesetzt werden, wobei die Entnahmeöffnung 501' der Entnahmeöffnung 501 analog der Eintrittsöffnung 100' zugewandt ist.

Fig. 22 bis 25 zeigen verschiedene Darstellungen eines Halters 3000 nach einer dritten Ausführungsform, in welchem der Schneidelementhalter 1*'* mit dem Schneidelement 400' eingespannt gehaltert ist. Um verschiedene Anordnungsmöglichkeiten der Filterelemente 4 bzw. des Filterelements 4 zu verdeutlichen, wird das Filterelement 4 des Schneidelementhalters 1*'* in Fig. 22 nicht gezeigt und das Filterelement 4 des Halters 3000 in Fig. 25 nicht gezeigt.

Durch die Fig. 22 bis 25 werden sonach drei Filteranordnungsmöglichkeiten für das Filterelement 4 bzw. die Filterelement 4 offenbart, nämlich dass das Filterelement 4 in dem Halter 3000 (erste Anordnung), wie dies in Fig. 22 ersichtlich ist, oder in dem Schneidelementhalter 1*'* (zweite Anordnung), wie dies in Fig. 25 ersichtlich ist, angeordnet ist oder dass zwei der Filterelemente 4 (dritte Anordnung), wie dies in Fig. 23 ersichtlich ist, angeordnet sind, das eine in dem Halter 3000 und das andere in dem Schneidelementhalter 1*'*.

Die Filtration des Kühlschmiermittels wird bei dem Halter 3000 nach der ersten und dritten Anordnung durch das Filterelement 4 realisiert, das in einem Kanal 3001 des Halters 3000 und damit außerhalb des Schneidelementhalters 1' angeordnet ist; alternativ oder ergänzend kann in den drei Anordnungsmöglichkeiten dafür auch das Filterelement 4' verwendet werden. Die Filtration des Kühlschmiermittel der zweiten Anordnung erfolgt durch das Filterelement 4 des Schneidelementhalters 1', wie dies in den Fig. 17, 18, 20 und 21 offenbart wird.

Die Filtration nach der ersten Anordnung ist dabei besonders gut in Fig. 22 ersichtlich, weil darin das Filterelement 4 des Schneidelementhalters 1' nicht dargestellt ist, die nach der dritten Anordnung in dem Längsschnitt nach Fig. 24.

Fig. 22 bis 25 zeigen, dass der Kanal 3001 dem Kanal 2100 analog in eine Eintrittsöffnung 3002 an einer Anschlussseite 3003 des Halters 3000 mündet. Aus der Anschlussseite 3003 ragt ein Schaft 3004 in Form eines im Wesentlichen zylindrischen Vorsprungs hervor, über welchen der Halter 3000 in einem anderen Halter eingespannt gehaltert werden kann. Dementsprechend können die Einspannung des Halters 3000 und eine Kühlschmiermittelversorgung dessen realisiert werden, indem die Anschlussseite 3003 dem anderen Halter und einer Kühlschmiermittelversorgung zugewendet wird.

Das Kühlschmiermittel tritt folglich durch die Eintrittsöffnung 3002 in den Kanal 3001 ein, strömt im Falle der ersten und dritten Anordnung durch das Filterelement 4 und tritt in weitere interne Kanäle des Halters 3000 in filtrierter Weise ein. Dabei werden durch das Filterelement 4 in dem Kühlschmiermittel enthaltene Späne abgeschieden und in dem Filterelement 4 angesammelt. Die von dem Kanal abzweigenden internen Kanäle lassen sich wie folgt beschreiben.

Der Kanal 3001a geht in einen Kanal 3001 quer dazu nach unten über. Die entsprechende obere Abzweigung in Form einer endseitig verschlossenen Zugangsbohrung davon ist in Fig. 23 ersichtlich, so dass als untere Fortsetzung davon der Kanal 3001 offenbart wird. Das Kühlschmiermittel wird dementsprechend quer nach unten umgelenkt, wenn es den Kanal 3001 in Richtung eines Kanals 3001a verlässt. Der Kanal 3001a geht in einen Kanal 3001b quer dazu über, so dass das Kühlschmiermittel achsparallel zu dem Kanal 3001 nach dieser zweifachen Umlenkung in dem Kanal 3001b strömt. In einem stirnseitigen Ende des Kanals 3001b ist eine Kugelspritzdüse 3005 drehbar in diesem gelagert. Eine Austrittsöffnung 3005a davon und damit der internen Kanalstruktur des Halters 3000 kann dabei in Richtung des Schneidteils 400b' orientiert werden.

Der Kanal 3001 geht in einen weiterer Kanal 3001d quer dazu über. Das Kühlschmiermittel wird dementsprechend umgelenkt. Der Kanal 3001d wird durch eine endseitig verschlossene Zugangsbohrung realisiert.

Der Kanal 3001d ist mit dem Kanal 45d' kommunizierend verbunden, wie dies zum Beispiel aus Fig. 24 im darin gezeigten Längsschnitt ersichtlich ist. Auf diese Weise wird eine interne Kühlschmiermittelversorgung des Schneidelementhalters 1' realisiert, indem das Kühlschmiermittel von dem Kanal 3001 über die Eintrittsöffnung 100*'* in der Kanal 45' eintritt. Bei der zweiten und dritten Anordnung erfolgt dabei eine Filtration des Kühlschmiermittels in dem Schneidelementhalter 1 durch dessen Filterelement 4.

Der Kanal 3001d geht in einen Kanal 3001e quer dazu über. Das Kühlschmiermittel wird dementsprechend umgelenkt. Der Kanal 3001e ist dem Kanal 3001d identisch aufgebaut und verfügt dementsprechend über eine Kugelspritzdüse 3005.

In dem Längsschnitt aus Fig. 24 ist besonders gut ersichtlich, dass der Schneidelementhalter im Bereich des Einspannabschnitts 2' über drei Gewindebolzen 3006 vorspannt gelagert ist; aus Gründen der Übersichtlichkeit ist der Einspannabschnitt nicht in Fig. 24, sondern in Fig. 17 mit dem Bezugszeichen 2' versehen. Die Gewindebolzen 3006 bilden dabei zusammen mit dem daran angrenzenden Bereich des Halters 3000 eine Einspannvorrichtung des Halters 3000 im Sinne der vorliegenden Offenbarung.

Fig. 27 bis 29 zeigen verschiedene Darstellungen eines Schneidelementhalters 1*"* nach einer dritten Ausführungsform; in Fig. 30 ist in einer taschenförmigen Ausfräsung 31" eine Schneidplatte 400*"*, die für eine Drehbearbeitung im Sinne eines Außendrehens ausgebildet ist, mittels einer Spannschraube 400a" befestigt, die in eine Gewindebohrung 400b" eingreift. Bei der Ausfräsung 31" handelt es sich demnach um eine Ausnehmung zur Aufnahme eines Schneidelements im Sinne der vorliegenden Offenbarung.

In einem Kanal 40" des Schneidelementhalters 1" ist ein Filterelement 4 angeordnet. Das Filterelement 4 bildet mit dem Kanal 40*"* eine Presspassung entlang seines Außenumfangs; in gleicherweise sind die in Fig. 1 bis 31 offenbarten Filterelemente 4 in den entsprechenden Kanälen mittels einer solchen Presspassung gelagert.

Der erste Kanal 40" mündet in eine Eintrittsöffnung 25", über welche der Kanal 40*"* von außen im Sinne einer Montage bzw. Demontage des Filterelements 4 zugänglich ist. Der Kanal 40" geht im Bereich des Filterelements 4 in einen Kanal 40a" schräg dazu über, so dass das Kühlschmiermittel in diesem in filtrierter Weise eintritt, wobei sich die abgeschiedenen Späne dabei in dem Filterelement 4 ansammeln, bis ein vorgegebenes Volumen erreicht wird. Der Kanal 40a" ist durch eine endseitig verschlossene Zugangsbohrung gebildet.

In Fig. 27 ist besonders gut ersichtlich, dass der Kanal 40a" in den Kanal 40b" kleineren Durchmessers schräg dazu übergeht, der durch eine endseitig verschlossene Zugangsbohrung gebildet ist. Quer zu dem Kanal 40b" geht dieser in einen Kanal 40c" über, welcher im Wesentlichen denselben Durchmesser aufweist, im Wesentlichen unterhalb der Ausfräsung 31" verläuft und ebenfalls durch eine endseitig verschlossene Zugangsbohrung gebildet ist. Senkrecht zu der Zeichnungsebene der Fig. 27 geht der Kanal 40c" in einen Kanal 40d" über, welcher in eine Austrittsöffnung 39a" mündet.

Wenn das Kühlschmiermittei aus der Austrittsöffnung 39a" austritt, trifft es im Wesentlichen auf eine Schneidecke 400c" der Schneidplatte 400", wie dies aus Fig. 29 ersichtlich ist.

Fig. 29 zeigt, dass danach ein optionaler, anderer Kühlschmiermittelaustritt durch eine Kühlschmiermitteldüse 3005" bereitgestellt wird. Dafür wird die Kühlschmiermitteldüse 3005" in den Kanal 40e", der in den Kanal 40a" in der Zeichnungsebene der Fig. 27 quer nach oben dazu übergeht, wie in Fig. 29 dargestellt wird, eingeführt; andernfalls wird der Kanal 40e" hermetisch abgedichtet. Der Kühlschmiermittelaustritt aus der Kühlschmiermitteldüse 3005" sorgt dafür, dass die Schneidplatte 400" insbesondere im Bereich ihrer Freifläche 400d" und daran angrenzenden Schneidkanten mit dem Kühlschmiermittel versorgt wird.

Ein dem Kanal 45 analog aufgebauter Kanal 45" mündet achsparallel in einen Kanal 45a", welcher größeren Durchmessers ist, ein Innengewinde für ein Gewindestopfenelement aufweist und in eine Eintrittsöffnung 100" an einem der Ausfräsung 31" gegenüberliegenden Ende des Schneidelementhalters 1" mündet; in Fig. 29 ist diese Öffnung exemplarisch durch einen Gewindestopfenelement 101" hermetisch abgedichtet.

In dem Kanal 45a" kann ein zweites Filterelement 4 alternativ oder ergänzend zu dem Filterelement 4 des Kanals 40a" angeordnet werden; der Übergang von dem größeren auf den kleineren Durchmesser bildet einen Anschlag, an welchem das Filterelement 4 stirnseitig anliegen kann, wie dies auch bei den anderen Ausführungsformen des Schneidelementhalters im Sinne der vorliegenden Offenbarung realisiert wird. Wie zum Beispiel in Fig. 18 ersichtlich ist, kann der Anschlag auch durch den konischen Auslauf gebildet werden.

Der ersten Ausführungsform entsprechend geht der Kanal 45" in einen Kanal 45b" kleineren Durchmessers quer dazu über, welcher mit einer anderen Kanalstruktur durch eine Überlappung von entsprechenden Öffnungen dieser verbunden werden kann.

Der ersten Ausführungsform entsprechend kann der Schneidelementhalter 1" in einen Einspannabschnitt 2" und einen Werkzeugabschnitt 3", in welchem sich die Ausfräsung 31" befindet, unterteilt werden; die entsprechenden Bezugszeichen werden lediglich aus Gründen der Übersichtlichkeit nur in Fig. 28 verwendet.

In der Darstellung nach Fig. 30 ist der Schneidelementhalter 1" mit der Schneidplatte 400" und der Kühlschmiermitteldüse 3005" in dem Halter 1000 dem Schneidelementhalter 1 gemäß Fig. 13 eingespannt, wobei das Filterelement 4 in dem Halter 1000 angeordnet ist und die Filtration des Kühlschmiermittels dementsprechend dort stattfindet, bevor es in den Schneidelementhalter 1" eintritt. In der Darstellung nach Fig. 30 ist der Schneidelementhalter 1" mit der Schneidplatte 400" und der Kühlschmiermitteldüse 3005" in dem Halter 1000 dem Schneidelementhalter 1. gemäß Fig. 12 eingespannt, wobei das Filterelement 4 in dem Schneidelementhalter 1" angeordnet ist und die Filtration des Kühlschmiermittels dementsprechend dort stattfindet, bevor es aus dem Schneidelementhalter 1" austritt.

Denkbar und auch möglich ist es aber auch, dass in dem Halter 1000 und dem Schneidelementhalter 1" jeweils ein Filterelement 4 gemäß Fig. 30 und 31 angeordnet ist, um auf diese Weise eine zweifache Filtration des Kühlschmiermittels bereitzustellen.

Dort wo das Filterelement 4 in den Fig. 1 bis 31 offenbart ist, kann alternativ oder ergänzend das Filterelement 4 in analoger Weise angeordnet werden.

## Patentansprüche

1. Schneidelementhalter (1, 1', 1") mit einer Ausnehmung (31, 31'. 31"), welche zur Aufnahme eines Schneidelements (400, 400'. 400") ausgebildet ist, einem Einspannabschnitt (2, 2', 2"), welcher zum Einspannen des Schneidelementhalters (1, 1', 1") in einem Werkzeughalter ausgebildet ist, einer durch ein Kühlschmiermittel durchströmbaren internen Kanalstruktur (40, 41, 42, 43, 44, 45, 45a, 31', 45', 45a', 45b', 45c', 40a", 40b", 40c", 40d", 40e", 45", 45a", 45b"), mindestens einer Eintrittsöffnung (25, 100, 100', 25", 100") zum Eintritt des Kühlschmiermittels in die Kanalstruktur (40, 41, 42, 43, 44, 45, 45a, 31', 45', 45a', 45b', 45c', 40a", 40b", 40c", 40d", 40e", 45", 45a", 45b") und mindestens einer Austrittsöffnung (39a, 39b, 39c, 39', 39") zum Austritt des Kühlschmiermittels aus der Kanalstruktur (40, 41, 42, 43, 44, 45, 45a, 31', 45', 45a', 45b', 45c', 40a", 40b", 40c", 40d", 40e", 45", 45a", 45b"), wobei mindestens in einem ersten Kanal (40, 45a, 45', 45a", 40a") der Kanalstruktur (40, 41, 42, 43, 44, 45, 45a, 31', 45', 45a', 45b', 45c', 40a", 40b", 40c", 40d", 40e", 45", 45a", 45b") ein Filterelement (4, 4') mit einer Filterstruktur (500, 500') zur Sperrung eines Transports durch das Kühlschmiermittel transportierter fester Teilchen angeordnet ist,
**dadurch gekennzeichnet, dass** das Filterelement (4, 4') als Behälter zur Bevorratung der am Transport gesperrten festen Teilchen ausgebildet ist, wobei das Filterelement (4, 4') einen Innenraum (501, 501') zur Aufnahme der am Transport gesperrten festen Teilchen und eine Entnahmeöffnung (503, 503a, 503b, 503') zur Entnahme der am Transport gesperrten festen Teilchen aus dem Innenraum (501, 501') aufweist, wobei das Filterelement (4, 4') derart angeordnet ist, dass das Kühlschmiermittel bei einer Strömung von der Eintrittsöffnung (25, 100, 100', 25", 100") nach der Austrittsöffnung (39a, 39b, 39c, 39', 39") in den Innenraum über die Entnahmeöffnung (503, 503a, 503b, 503') eintritt, wobei durch die Filterstruktur (500, 500') eine den Innenraum (501, 501') umfänglich umgebende Filterumfangswandung (500c, 500c') gebildet ist.

2. Schneidelementhalter (1, 1', 1") nach Anspruch 1, **dadurch gekennzeichnet, dass** durch die Filterstruktur (500, 500') eine den Innenraum (501, 501') an einem Ende (502, 502') begrenzende Filterbodenwandung (500d, 500d') gebildet ist.

3. Schneidelementhalter (1, 1', 1") nach Anspruch 1 oder 2, **dadurch gekennzeichnet, dass** das Filterelement (4, 4') eine Rahmenstruktur (504, 505, 506, 505', 506', 507') zur zumindest bereichsweisen Abstützung der Filterstruktur (500, 500') aufweist.

4. Schneidelementhalter (1, 1', 1") nach einem der vorhergehenden Ansprüche, **dadurch** g**ekennzeichnet**, **dass** das Filterelement (4, 4') ein Ösenelement (504) zum formschlüssigen Eingriff mit einem Hakenelement aufweist.

5. Schneidelementhalter (1, 1', 1") nach einem der vorhergehenden Ansprüche, d**adurch gekennzeichnet**, **dass** das Filterelement (4, 4') in dem ersten Kanal axial beweglich gelagert ist.

6. Schneidelementhalter (1, 1', 1") nach einem der vorhergehenden Ansprüche, d**adurch gekennzeichnet**, **dass** der erste Kanal (40, 45a, 45', 45a", 40a") in einen zweiten Kanal (42, 43, 45, 45a', 45b', 40a", 40b", 45") der Kanalstruktur (40, 41, 42, 43, 44, 45, 45a, 31', 45', 45a', 45b', 45c', 40a", 40b", 40c", 40d", 40e", 45", 45a", 45b") übergeht und das Kühlschmiermittel bei einer Strömung von der Eintrittsöffnung (25, 100, 100', 25", 100") nach der Austrittsöffnung (39a, 39b, 39c, 39', 39") das Filterelement (4, 4') durchströmt, bevor es in den zweiten Kanal (42, 43, 45, 45a', 45b', 40a", 40b", 45") eintritt.

7. Schneidelementhalter (1, 1', 1") nach Anspruch 6, **dadurch** g**ekennzeichnet**, **dass** der erste Kanal (40, 45a, 45', 45a", 40a") in den zweiten Kanal (42, 43, 45, 45a', 45b', 40a", 40b", 45") derart übergeht, dass bei der Strömung des Kühlschmiermittels von der Eintrittsöffnung (25, 100, 100', 25", 100") nach der Austrittsöffnung (39a, 39b, 39c, 39', 39") dieses umgelenkt wird.

8. Halter (1000, 1000', 2000, 3000) mit einer Einspannvorrichtung (1001, 1002, 1003, 1003a, 1001', 1002', 1003a', 3006), welche zum Einspannen eines Schneidelementhalters (1, 1', 1") ausgebildet ist, einer durch ein Kühlschmiermittel durchströmbaren internen Kanalstruktur (1100, 1101, 1100', 1101', 2100, 3001, 3001a, 3001b, 3001c, 3001d, 3001e), mindestens einer Eintrittsöffnung (2101, 3002) zum Eintritt des Kühlschmiermittels in die Kanalstruktur (1100, 1101, 1100', 1101', 2100, 3001, 3001a, 3001b, 3001c, 3001d, 3001e) und mindestens einer Austrittsöffnung (1200, 1200', 3005a) zum Austritt des Kühlschmiermittels aus der Kanalstruktur (1100, 1101, 1100', 1101', 2100, 3001, 3001a, 3001b, 3001c, 3001d, 3001e), wobei mindestens in einem ersten Kanal (1100, 1100', 2100, 3001) der Kanalstruktur (1100, 1101, 1100', 1101', 2100, 3001, 3001a, 3001b, 3001c, 3001d, 3001e) ein Filterelement (4, 4') mit einer Filterstruktur (500, 500') zur Sperrung eines Transports durch das Kühlschmiermittel transportierter fester Teilchen angeordnet ist,
**dadurch gekennzeichnet, dass** das Filterelement (4, 4') als Behälter zur Bevorratung der am Transport gesperrten festen Teilchen ausgebildet ist, wobei das Filterelement (4, 4') einen Innenraum (501, 501') zur Aufnahme der am Transport gesperrten festen Teilchen und eine Entnahmeöffnung (503, 503a, 503b, 503') zur Entnahme der am Transport gesperrten festen Teilchen aus dem Innenraum (501, 501') aufweist, wobei das Filterelement (4, 4') derart angeordnet ist, dass das Kühlschmiermittel bei einer Strömung von der Eintrittsöffnung (2101, 3002) nach der Austrittsöffnung (1200, 1200', 3005a) in den Innenraum über die Entnahmeöffnung (503, 503a, 503b, 503') eintritt, wobei durch die Filterstruktur (500, 500') eine den Innenraum (501, 501') umfänglich umgebende Filterumfangswandung (500c, 500c') gebildet ist.

9. Halter (1000, 1000', 2000, 3000) nach Anspruch 8, **dadurch gekennzeichnet, dass** durch die Filterstruktur (500, 500') eine den Innenraum (501, 501') an einem Ende (502, 502') begrenzende Filterbodenwandung (500d, 500d') gebildet ist.

10. Halter (1000, 1000', 2000, 3000) nach Anspruch 8 oder 9, **dadurch** g**ekennzeichnet**, **dass** das Filterelement (4, 4') ein Ösenelement (504) zum formschlüssigen Eingriff mit einem Hakenelement aufweist.

11. Halter (1000, 1000', 2000, 3000) nach einem der Ansprüche 8 bis 10, **dadurch gekennzeichnet, dass** der Halter (1000, 1000', 2000, 3000) an einer Anschlussseite (1004a, 1004a', 2002, 3003) des Halters (1000, 1000', 2000, 3000) einen Schaft (1004, 1004', 2200, 3004) aufweist, welcher zum Einspannen in einem anderem Halter (1000, 1000', 2000, 3000) ausgebildet ist, die Anschlussseite (1004a, 1004a', 2002, 3003) die Eintrittsöffnung (2101, 3002) aufweist und der erste Kanal (1100, 1100', 2100, 3001) in die Eintrittsöffnung (2101, 3002) mündet.

## Claims

1. Cutting element holder (1, 1', 1") with a recess (31, 31', 31") designed to accommodate a cutting element (400, 400', 400"), a clamping section (2, 2', 2") designed to clamp the cutting element holder (1, 1', 1") in a tool holder, an internal channel structure (40, 41, 42, 43, 44, 45, 45a, 31', 45', 45a', 45b', 45c', 40a", 40b", 40c", 40d", 40e", 45", 45a", 45b") through which a cooling lubricant can flow, at least one inlet opening (25, 100, 100', 25", 100") for the entry of the cooling lubricant into the channel structure (40, 41, 42, 43, 44, 45, 45a, 31', 45', 45a', 45b', 45c', 40a", 40b", 40c", 40d", 40e", 45", 45a", 45b"), and at least one outlet opening (39a, 39b, 39c, 39', 39") for the exit of the cooling lubricant from the channel structure (40, 41, 42, 43, 44, 45, 45a, 31', 45', 45a', 45b', 45c', 40a", 40b", 40c", 40d", 40e", 45", 45a", 45b"), wherein at least in a first channel (40, 45a, 45', 45a", 40a") of the channel structure (40, 41, 42, 43, 44, 45, 45a, 31', 45', 45a', 45b', 45c', 40a", 40b", 40c", 40d", 40e", 45", 45a", 45b") a filter element (4, 4') with a filter structure (500, 500') for blocking the transport of solid particles carried by the cooling lubricant is arranged, **characterized in that** the filter element (4, 4') is designed as a container for storing the solid particles blocked during transport, wherein the filter element (4, 4') has an interior space (501, 501') for accommodating the solid particles blocked during transport and a removal opening (503, 503a, 503b, 503') for removing the solid particles blocked during transport from the interior space (501, 501'), wherein the filter element (4, 4') is arranged such that the cooling lubricant, when flowing from the inlet opening (25, 100, 100', 25", 100") to the outlet opening (39a, 39b, 39c, 39', 39"), enters the interior space through the removal opening (503, 503a, 503b, 503'), wherein a filter peripheral wall (500c, 500c') that circumferentially surrounds the interior space (501, 501') is formed by the filter structure (500, 500').

2. Cutting element holder (1, 1', 1") according to claim 1, **characterized in that** a filter bottom wall (500d, 500d') that limits the interior space (501, 501') at one end (502, 502') is formed by the filter structure (500, 500').

3. Cutting element holder (1, 1', 1") according to claim 1 or 2, **characterized in that** the filter element (4, 4') has a frame structure (504, 505, 506, 505', 506', 507') for at least partially supporting the filter structure (500, 500').

4. Cutting element holder (1, 1', 1") according to any of the preceding claims, **characterized in that** the filter element (4, 4') has an eyelet element (504) for interlocking engagement with a hook element.

5. Cutting element holder (1, 1', 1") according to any of the preceding claims, **characterized in that** the filter element (4, 4') is axially movably mounted in the first channel.

6. Cutting element holder (1, 1', 1") according to any of the preceding claims, **characterized in that** the first channel (40, 45a, 45', 45a", 40a") transitions into a second channel (42, 43, 45, 45a', 45b', 40a", 40b", 45") of the channel structure (40, 41, 42, 43, 44, 45, 45a, 31', 45', 45a', 45b', 45c', 40a", 40b", 40c", 40d", 40e", 45", 45a", 45b"), and the cooling lubricant flows through the filter element (4, 4') before entering the second channel (42, 43, 45, 45a', 45b', 40a", 40b", 45") when flowing from the inlet opening (25, 100, 100', 25", 100") to the outlet opening (39a, 39b, 39c, 39', 39").

7. Cutting element holder (1, 1', 1") according to claim 6, **characterized in that** the first channel (40, 45a, 45', 45a", 40a") merges into the second channel (42, 43, 45, 45a', 45b', 40a", 40b", 45") in such a way that the cooling lubricant is diverted when flowing from the inlet opening (25, 100, 100', 25", 100") to the outlet opening (39a, 39b, 39c, 39', 39").

8. Holder (1000, 1000', 2000, 3000) with a clamping device (1001, 1002, 1003, 1003a, 1001', 1002', 1003a', 3006) designed to clamp a cutting element holder (1, 1', 1"), an internal channel structure (1100, 1101, 1100', 1101', 2100, 3001, 3001a, 3001b, 3001c, 3001d, 3001e) through which a cooling lubricant can flow, at least one inlet opening (2101, 3002) for the entry of the cooling lubricant into the channel structure (1100, 1101, 1100', 1101', 2100, 3001, 3001a, 3001b, 3001c, 3001d, 3001e), and at least one outlet opening (1200, 1200', 3005a) for the exit of the cooling lubricant from the channel structure (1100, 1101, 1100', 1101', 2100, 3001, 3001a, 3001b, 3001c, 3001d, 3001e), wherein at least in a first channel (1100, 1100', 2100, 3001) of the channel structure (1100, 1101, 1100', 1101', 2100, 3001, 3001a, 3001b, 3001c, 3001d, 3001e) a filter element (4, 4') with a filter structure (500, 500') for blocking the transport of solid particles carried by the cooling lubricant is arranged, **characterized in that** the filter element (4, 4') is designed as a container for storing the solid particles blocked during transport, wherein the filter element (4, 4') has an interior space (501, 501') for accommodating the solid particles blocked during transport and a removal opening (503, 503a, 503b, 503') for removing the solid particles blocked during transport from the interior space (501, 501'), wherein the filter element (4, 4') is arranged such that the cooling lubricant, when flowing from the inlet opening (2101, 3002) to the outlet opening (1200, 1200', 3005a), enters the interior space through the removal opening (503, 503a, 503b, 503'), wherein a filter peripheral wall (500c, 500c') that circumferentially surrounds the interior space (501, 501') is formed by the filter structure (500, 500').

9. Holder (1000, 1000', 2000, 3000) according to claim 8, **characterized in that** a filter bottom wall (500d, 500d') that limits the interior space (501, 501') at one end (502, 502') is formed by the filter structure (500, 500').

10. Holder (1000, 1000', 2000, 3000) according to claim 8 or 9, **characterized in that** the filter element (4, 4') has an eyelet element (504) for interlocking engagement with a hook element.

11. Holder (1000, 1000', 2000, 3000) according to anyone of claims 8 to 10, **characterized in that** the holder (1000, 1000', 2000, 3000) has a shaft (1004, 1004', 2200, 3004) on a connection side (1004a, 1004a', 2002, 3003), which is designed for clamping in another holder (1000, 1000', 2000, 3000), the connection side (1004a, 1004a', 2002, 3003) has the inlet opening (2101, 3002), and the first channel (1100, 1100', 2100, 3001) opens into the inlet opening (2101, 3002).

## Revendications

1. Support d'élément de coupe (1, 1', 1") comprenant un évidement (31, 31', 31''), qui est conçu pour recevoir un élément de coupe (400, 400', 400''), une section de serrage (2, 2', 2"), qui est conçue pour serrer le support d'élément de coupe (1, 1', 1") dans un porte-outil, une structure de canal interne (40, 41, 42, 43, 44, 45, 45a, 31', 45', 45a', 45b', 45c', 40a'', 40b'', 40c'', 40d'', 40e'', 45'', 45a'', 45b'') apte à être traversée par un lubrifiant de refroidissement, au moins une ouverture d'entrée (25, 100, 100', 25'', 100") pour l'entrée du lubrifiant de refroidissement dans la structure de canal (40, 41, 42, 43, 44, 45, 45a, 31', 45', 45a', 45b', 45c', 40a'', 40b'', 40c'', 40d'', 40e'', 45'', 45a'', 45b'') et au moins une ouverture de sortie (39a, 39b, 39c, 39', 39") pour la sortie du lubrifiant de refroidissement de la structure de canal (40, 41, 42, 43, 44, 45, 45a, 31', 45', 45a', 45b', 45c', 40a'', 40b'', 40c'', 40d'', 40e'', 45'', 45a'', 45b"), dans lequel au moins dans un premier canal (40, 45a, 45', 45a'', 40a'') de la structure de canal (40, 41, 42, 43, 44, 45, 45a, 31', 45', 45a', 45b', 45c', 40a'', 40b'', 40c'', 40d'', 40e'', 45'', 45a'', 45b'') est agencé un élément de filtre (4, 4') avec une structure de filtre (500, 500') pour bloquer un transport de particules solides transportées par le lubrifiant de refroidissement,
**caractérisé en ce que** l'élément de filtre (4, 4') est réalisé sous forme de récipient pour le stockage des particules solides bloquées lors du transport, l'élément de filtre (4, 4') présentant un espace intérieur (501, 501') pour recevoir les particules solides bloquées lors du transport et une ouverture de prélèvement (503, 503a, 503b, 503') pour retirer de l'espace intérieur (501, 501') les particules solides bloquées lors du transport, l'élément de filtre (4, 4') étant agencé de telle sorte que le lubrifiant de refroidissement, lors d'un écoulement depuis l'ouverture d'entrée (25, 100, 100', 25'', 100'') vers l'ouverture de sortie (39a, 39b, 39c, 39', 39") soit entré dans l'espace intérieur par l'ouverture de prélèvement (503, 503a, 503b, 503'), une paroi périphérique de filtre (500c, 500c') entourant de manière périphérique l'espace intérieur (501, 501') étant formée par la structure de filtre (500, 500').

2. Support d'élément de coupe (1, 1', 1'') selon la revendication 1, **caractérisé en ce qu'**une paroi de fond de filtre (500d, 500d') délimitant l'espace intérieur (501, 501') à une extrémité (502, 502') est formée par la structure de filtre (500, 500').

3. Support d'élément de coupe (1, 1', 1'') selon la revendication 1 ou 2, **caractérisé en ce que** l'élément de filtre (4, 4') présente une structure de châssis (504, 505, 506, 505', 506', 507') pour soutenir au moins par endroits la structure de filtre (500, 500').

4. Support d'élément de coupe (1, 1', 1'') selon l'une des revendications précédentes, **caractérisé en ce que** l'élément de filtre (4, 4') présente un élément à oeillet (504) destiné à s'engager par complémentarité de forme avec un élément à crochet.

5. Support d'élément de coupe (1, 1', 1'') selon l'une des revendications précédentes, **caractérisé en ce que** l'élément de filtre (4, 4') est monté mobile axialement dans le premier canal.

6. Support d'élément de coupe (1, 1', 1'') selon l'une quelconque des revendications précédentes, **caractérisé en ce que** le premier canal (40, 45a, 45', 45a'', 40a'') se transforme en un deuxième canal (42, 43, 45, 45a', 45b', 40a'', 40b'', 45'') de la structure de canal (40, 41, 42, 43, 44, 45, 45a, 31', 45', 45a', 45b', 45c', 40a'', 40b'', 40c'', 40d'', 40e'', 45'', 45a'', 45b'') et le lubrifiant de refroidissement, lors d'un écoulement depuis l'ouverture d'entrée (25, 100, 100', 25", 100'') vers l'ouverture de sortie (39a, 39b, 39c, 39', 39''), traverse l'élément de filtre (4, 4') avant de pénétrer dans le deuxième canal (42, 43, 45, 45a', 45b', 40a'', 40b'', 45'').

7. Support d'élément de coupe (1, 1', 1'') selon la revendication 6, **caractérisé en ce que** le premier canal (40, 45a, 45', 45a'', 40a'') se transforme en deuxième canal (42, 43, 45, 45a', 45b', 40a'', 40b'', 45'') de telle sorte que, lors de l'écoulement du lubrifiant de refroidissement depuis l'ouverture d'entrée (25, 100, 100', 25", 100'') vers l'ouverture de sortie (39a, 39b, 39c, 39', 39''), celui-ci est dévié.

8. Support (1000, 1000', 2000, 3000) avec un dispositif de serrage (1001, 1002, 1003, 1003a, 1001', 1002', 1003a', 3006), qui est conçu pour serrer un support d'élément de coupe (1, 1', 1''), une structure de canal interne (1100, 1101, 1100', 1101', 2100, 3001, 3001a, 3001b, 3001c, 3001d, 3001e) apte à être traversée par un lubrifiant de refroidissement, au moins une ouverture d'entrée (2101, 3002) pour l'entrée du lubrifiant de refroidissement dans la structure de canal (1100, 1101, 1100', 1101', 2100, 3001, 3001a, 3001b, 3001c, 3001d, 3001e) et au moins une ouverture de sortie (1200, 1200', 3005a) pour la sortie du lubrifiant de refroidissement de la structure de canal (1100, 1101, 1100', 1101', 2100, 3001, 3001a, 3001b, 3001c, 3001d, 3001e), dans lequel, au moins dans un premier canal (1100, 1100', 2100, 3001) de la structure de canal (1100, 1101, 1100', 1101', 2100, 3001, 3001a, 3001b, 3001c, 3001d, 3001e), est disposé un élément de filtre (4, 4') avec une structure de filtre (500, 500') pour bloquer un transport de particules solides transportées par le lubrifiant de refroidissement, **caractérisé en ce que** l'élément de filtre (4, 4') est conçu sous forme d'un récipient pour stocker les particules solides bloquées lors du transport, l'élément de filtre (4, 4') ayant un espace intérieur (501, 501') pour recevoir les particules solides bloquées lors du transport et une ouverture de prélèvement (503, 503a, 503b, 503') pour prélever de l'espace intérieur (501, 501') les particules solides bloquées lors du transport, l'élément de filtre (4, 4') étant agencé de telle sorte que le lubrifiant de refroidissement pénètre dans l'espace intérieur par l'ouverture de prélèvement (503, 503a, 503b, 503') lors d'un écoulement depuis l'ouverture d'entrée (2101, 3002) vers l'ouverture de sortie (1200, 1200', 3005a), une paroi périphérique de filtre (500c, 500c'), entourant l'espace intérieur (501, 501') de manière périphérique, étant formée par la structure de filtre (500, 500').

9. Support (1000, 1000', 2000, 3000) selon la revendication 8, **caractérisé en ce qu'**une paroi de fond de filtre (500d, 500d') délimitant l'espace intérieur (501, 501') à une extrémité (502, 502') est formée par la structure de filtre (500, 500').

10. Support (1000, 1000', 2000, 3000) selon la revendication 8 ou 9, **caractérisé en ce que** l'élément de filtre (4, 4') comporte un élément à oeillet (504) destiné à s'engager par complémentarité de forme avec un élément à crochet.

11. Support (1000, 1000', 2000, 3000) selon l'une des revendications 8 à 10, **caractérisé en ce que** le support (1000, 1000', 2000, 3000) comporte, sur un côté de raccordement (1004a, 1004a', 2002, 3003) du support (1000, 1000', 2000, 3000), une tige (1004, 1004', 2200, 3004), qui est conçue pour être serrée dans un autre support (1000, 1000', 2000, 3000), le côté de raccordement (1004a, 1004a', 2002, 3003) présente l'ouverture d'entrée (2101, 3002) et le premier canal (1100, 1100', 2100, 3001) débouche dans l'ouverture d'entrée (2101, 3002).
